# EUROPÄISCHE PATENTSCHRIFT

(11) **EP 2 816 316 B1**
(45) Veröffentlichungstag und Bekanntmachung des Hinweises auf die Patenterteilung: **30.12.2015**
(21) Anmeldenummer: 14171054.1
(22) Anmeldetag: 04.06.2014
(51) Int. Cl.: G01B 9/02

(54) **Interferometer**
Interferometer
Interféromètre

(30) Priorität: 21.06.2013 DE 102013211758
(43) Veröffentlichungstag der Anmeldung: 24.12.2014
(73) Patentinhaber: Dr. Johannes Heidenhain GmbH, 83301 Traunreut (DE)
(72) Erfinder: Meissner, Markus, 83236 Übersee (DE); Joerger, Ralph, 83278 Traunstein (DE); Drescher, Jörg, 83122 Samerberg (DE); Holzapfel, Wolfgang, 83119 Obing (DE)

(56) Entgegenhaltungen:
- US-A- 4 752 133
- US-A1- 2012 112 050
- US-A1- 2013 057 872

## Beschreibung

### GEBIET DER TECHNIK

Die vorliegende Erfindung betrifft ein Interferometer, das insbesondere zur hochpräzisen Längen- und/oder Abstandsmessung geeignet ist.

### STAND DER TECHNIK

Ein sog. Planspiegel-Interferometer ist aus der US 4,752,133 bekannt. Dieses umfasst eine Lichtquelle, einen Strahlteiler sowie eine Detektoranordnung. Über den Strahlteiler wird ein von der Lichtquelle emittiertes Strahlenbündel in mindestens ein Messstrahlenbündel und mindestens ein Referenzstrahlenbündel aufgespalten. Das Messstrahlenbündel und das Referenzstrahlenbündel propagieren sodann jeweils in einem Messarm und in einem Referenzarm bis zur Wiedervereinigung am Strahlteiler. Im Messarm ist ein als Planspiegel ausgebildeter Messreflektor an einem beweglichen Messobjekt angeordnet; der Referenzarm weist mindestens einen Referenz-Retroreflektor auf. Mit Hilfe der Detektoranordnung ist mindestens ein Abstandssignal aus den wiedervereinigten, interferierenden Mess- und Referenzstrahlenbündeln bzgl. der Position des Messobjekts erfassbar.

Als Strahlteiler ist in der US 4,752,133 ein Polarisations-Strahlteilerwürfel vorgesehen, als Referenz-Retroreflektor dient ein Tripelprisma; bekannt sind in diesem Zusammenhang auch alternative Varianten von Referenz-Retroreflektoren mit mehreren Tripelprismen. Das Tripelprisma des Referenz-Retroreflektors ist hierbei am Strahlteilerwürfel angeklebt oder angesprengt; desweiteren kann das Tripelprisma auch räumlich getrennt vom Strahlteilerwürfel angeordnet werden.

Als nachteilig an derartigen Interferometern ist anzuführen, dass sowohl der Polarisations-Strahlteilerwürfel als auch das Tripelprisma nur sehr aufwendig herstellbar sind. So müssen beim Strahlteilerwürfel die verschiedenen Seiten hochexakt zueinander ausgerichtet sein, insbesondere wenn ein oder mehrere Tripelprismen und ggf. weitere optische Bauelemente unmittelbar daran angeordnet werden. Im Fall der räumlich getrennten Anordnung von Strahlteilerwürfel und Tripelprismen ist eine ebenfalls sehr aufwendige, driftarme Lagerung dieser Bauteile erforderlich. Hinzu kommt, dass bei großen geforderten Kipp-Toleranzen des Messobjekts das Tripelprisma relativ groß bauend ausgebildet sein muss.

### ZUSAMMENFASSUNG DER ERFINDUNG

Der vorliegenden Erfindung liegt die Aufgabe zugrunde, ein kompakt aufgebautes Interferometer zu schaffen, das möglichst einfach zu fertigende optische Komponenten aufweist.

Diese Aufgabe wird erfindungsgemäß durch ein Interferometer mit den Merkmalen des Anspruchs 1 gelöst.

Vorteilhafte Ausführungen des erfindungsgemäßen Interferometers ergeben sich aus den Maßnahmen, die in den abhängigen Ansprüchen aufgeführt sind.

Das erfindungsgemäße Interferometer umfasst eine Lichtquelle, einen Strahlteiler, einen Messreflektor, einen Referenz-Retroreflektor, eine Detektoranordnung sowie zwei transparente Planplatten. Der Strahlteiler spaltet ein von der Lichtquelle emittiertes erstes Strahlenbündel in mindestens ein Messstrahlenbündel und mindestens ein Referenzstrahlenbündel auf, über die eine erste Aufspaltebene aufgespannt ist. Bis zur Wiedervereinigung an einem Vereinigungsort in einer ersten Vereinigungsebene propagiert das Messstrahlenbündel in einem Messarm und das Referenzstrahlenbündel in einem Referenzarm. Die erste Vereinigungsebene ist parallel zur ersten Aufspaltebene orientiert. Der Messreflektor ist im Messarm angeordnet und mit einem entlang einer Messrichtung beweglichen Messobjekt verbunden. Das Messstrahlenbündel fällt mindestens zweimal senkrecht auf den Messreflektor ein. Der Referenz-Retroreflektor ist im Referenzarm angeordnet, wobei das Referenzstrahlenbündel mindestens einmal auf den Referenz-Retroreflektor einfällt. Über die Detektoranordnung ist mindestens ein erstes Abstandssignal aus den am Vereinigungsort überlagerten interferierenden Mess- und Referenzstrahlenbündeln bezüglich der Position des Messobjekts erfassbar. Die erste transparente Planplatte und die zweite transparente Planplatte sind parallel zueinander im Strahlengang zwischen der Lichtquelle und der Detektoranordnung angeordnet. Der Messreflektor ist beweglich gegenüber den beiden Planplatten entlang der Messrichtung angeordnet. In der ersten Planplatte ist der Referenz-Retroreflektor ausgebildet und auf der zweiten Planplatte ist der Strahlteiler angeordnet.

In einer vorteilhaften Ausführungsform ist der Referenz-Retroreflektor in der ersten Planplatte als diffraktiver Retroreflektor ausgebildet und umfasst mindestens eine auf einer Seite der ersten Planplatte angeordnete Gitterlinse und mindestens einen auf der gegenüberliegenden Seite der ersten Planplatte angeordneten planen Reflektor, dessen reflektierende Seite in Richtung der Gitterlinse orientiert ist und wobei über die mindestens eine Gitterlinse eine Umlenkung und Fokussierung des darauf einfallenden Referenzstrahlenbündels auf den Reflektor erfolgt.

Es kann vorgesehen sein, dass die erste Planplatte desweiteren mindestens eine Verzögerungseinheit aufweist, entlang der das Referenzstrahlenbündel propagiert und die Verzögerungseinheit mindestens zwei plane Reflektoren umfasst, die an gegenüberliegenden Seiten der ersten Planplatte angeordnet sind, wobei die reflektierenden Flächen der Reflektoren jeweils in Richtung der gegenüberliegenden Seite der ersten Planplatte orientiert sind.

Dabei ist es möglich, dass die mindestens eine Verzögerungseinheit, die das Referenzstrahlenbündel in der ersten Planplatte durchläuft, derart ausgebildet ist, dass das Referenzstrahlenbündel und das Messstrahlenbündel zwischen Aufspaltung und Wiedervereinigung identische Wege in den beiden Planplatten durchlaufen.

Mit Vorteil ist der Strahlteiler auf der zweiten Planplatte als polarisationsoptische Strahlteilerschicht ausgebildet, die auf einer ersten Seite der zweiten Planplatte angeordnet ist und wobei diese Seite in Richtung der ersten Planplatte orientiert ist.

Es kann ferner vorgesehen sein, dass in der zweiten Planplatte desweiteren mindestens ein Mess-Retroreflektor in Form eines diffraktiven Retroreflektors ausgebildet ist und mindestens eine auf einer Seite der zweiten Planplatte angeordnete Gitterlinse und mindestens einen auf der gegenüberliegenden Seite der zweiten Planplatte angeordneten planen Reflektor umfasst, dessen reflektierende Seite in Richtung der Gitterlinse orientiert ist und wobei über die Gitterlinse eine Umlenkung und Fokussierung des darauf einfallenden Messstrahlenbündels auf den Reflektor erfolgt.

Desweiteren kann in einer möglichen Ausführungsform vorgesehen sein, dass senkrecht beabstandet zur ersten Aufspaltebene mindestens ein zweites Strahlenbündel in einer zweiten Aufspaltebene auf die erste Planplatte einfällt und die beiden Planplatten in einem weiteren Bereich so ausgebildet sind, dass in Bezug auf das zweite Strahlenbündel in der zweiten Aufspaltebene und in einer zweiten Vereinigungsebene ein identischer Strahlverlauf wie in den ersten Aufspalt- und Vereinigungsebenen resultiert, und darüber ein zweites Abstandssignal bezüglich der Bewegung des Messobjekts entlang der Messrichtung erzeugbar ist.

In einer weiteren Ausführungsform ist es möglich, dass in der ersten Aufspaltebene beabstandet zum ersten Strahlenbündel mindestens ein zweites Strahlenbündel auf die erste Planplatte einfällt und die beiden Planplatten in einem weiteren Bereich so ausgebildet sind, dass in Bezug auf das zweite Strahlenbündel in der ersten Aufspaltebene und in der ersten Vereinigungsebene ein identischer Strahlverlauf wie beim ersten Strahlenbündel resultiert, und darüber ein zweites Abstandssignal bezüglich der Bewegung des Messobjekts entlang der Messrichtung erzeugbar ist.

Schließlich gibt es noch weitere Ausführungsformen, in denen
- die zweite Planplatte ferner ein erstes Abbildungselement aufweist mit
   - mindestens einer ersten Gitterlinse und einer zweiten Gitterlinse, die beide auf einer Seite der zweiten Planplatte angeordnet sind,
   - und mindestens einem auf der gegenüberliegenden Seite der zweiten Planplatte angeordneten ersten planen Reflektor, dessen reflektierende Seite in Richtung der ersten und zweiten Gitterlinse orientiert ist,
   - wobei über das erste Abbildungselement eine Vergrößerung des Strahldurchmessers des darauf einfallenden Messstrahlenbündels resultiert, und
- die erste Planplatte ferner ein zweites Abbildungselement aufweist mit
   - mindestens einer dritten Gitterlinse und einer vierten Gitterlinse, die beide auf einer Seite der ersten Planplatte angeordnet sind,
   - und einem auf der gegenüberliegenden Seite der ersten Planplatte angeordneten zweiten planen Reflektor, dessen reflektierende Seite in Richtung der dritten und vierten diffraktiven Gitterlinse orientiert ist,
   - wobei über das zweite Abbildungselement eine Verkleinerung des Strahldurchmessers des darauf einfallenden Messstrahlenbündels resultiert.

In einer solchen Ausführungsform kann vorgesehen sein, dass
- über die erste und dritte Gitterlinse jeweils eine Fokussierung des darauf einfallenden Messstrahlenbündels resultiert und
- über die zweite und vierte Gitterlinse jeweils eine Kollimation des darauf einfallenden Messstrahlenbündels resultiert.

Ferner ist in einer derartigen Ausführungsform möglich, dass
- das Messstrahlenbündel nach dem Durchlaufen des ersten Abbildungselements in einer Zwischenebene in Richtung des Messreflektors propagiert und die Zwischenebene zwischen der ersten Aufspaltebene und der ersten Vereinigungsebene angeordnet und parallel zu diesen orientiert ist und
- das Messstrahlenbündel nach dem Durchlaufen des zweiten Abbildungselements in der ersten Vereinigungsebene propagiert.

Schließlich kann in dieser Ausführungsform vorgesehen sein, dass der Referenz-Retroreflektor in der ersten Planplatte als diffraktiver Retroreflektor ausgebildet ist und zwei auf einer Seite der ersten Planplatte angeordnete Gitterlinsen sowie einen planen Reflektor und zwei auf der gegenüberliegenden Seite der ersten Planplatte angeordnete plane Reflektoren umfasst, wobei die reflektierenden Seiten der Reflektoren jeweils zur gegenüberliegenden Seite orientiert sind, so dass das in der ersten Aufspaltebene auf die erste Planplatte einfallende Referenzstrahlenbündel zunächst einen optisch unwirksamen Bereich der ersten Planplatte durchläuft und auf die erste Gitterlinse trifft, über die eine Umlenkung des Referenzstrahlenbündels in Richtung des gegenüberliegenden ersten planen Reflektors erfolgt, vom ersten planen Reflektor eine Umlenkung des Referenzstrahlenbündels in Richtung des gegenüberliegenden zweiten planen Reflektors in der Zwischenebene erfolgt, vom zweiten planen Reflektor eine Umlenkung des Referenzstrahlenbündels in Richtung des gegenüberliegenden dritten planen Reflektors erfolgt, und vom dritten planen Reflektor eine Umlenkung des Referenzstrahlenbündels in Richtung der zweiten Gitterlinse in der ersten Vereinigungsebene resultiert.

Es ist desweiteren möglich, dass die verwendeten Gitterlinsen jeweils als Reflexions-Gitterlinsen ausgebildet sind.

Als besonders vorteilhaft erweist sich beim erfindungsgemäßen Interferometer, dass die aufwändige Herstellung eines Strahlteilerwürfels und ein oder mehrerer Tripelprismen entfällt. Nötig sind zur Implementierung der optischen Funktionalität dieser Elemente in den Strahlengängen erfindungsgemäß nunmehr lediglich Planplatten, auf denen geeignete Gitterstrukturen und Reflektoren angeordnet sind. Derartige Planplatten inklusive der darauf angeordneten Elemente sind über geeignete Lithographieverfahren kostengünstig und einfach herzustellen; insbesondere ist dabei ein aufwändiges Polieren von 90°-Winkeln nicht mehr nötig. Es entfallen ferner sowohl die im Stand der Technik erforderlichen Klebungen in optisch relevanten Bereichen der Strahlengänge als auch die aufwändige, driftarme Anordnung von optischen Bauteilen in den Strahlengängen.

Aufgrund der vorgesehenen Verwendung von Gitterlinsen, ausgebildet als diffraktive off-axis Gitterstrukturen, resultiert als weiterer Vorteil in der vorliegenden Erfindung eine Reduzierung von unerwünschten Störeinflüssen in den erzeugten Abstandssignalen. Insbesondere werden dadurch bei der Signalerzeugung störende Beugungsordnungen separiert und führen so nicht zu harmonischen oder subharmonischen Oszillationen in den gewonnenen Abstandssignalen.

Schließlich ist noch anzuführen, dass sich auf Grundlage der vorliegenden Erfindung Interferometer für eine ggf. erforderliche Vielzahl von Messachsen aufbauen lassen. Hierbei sind als optisch funktionsrelevante Bauteile i.w. nur Planplatten erforderlich, auf deren Ober- und Unterseiten die entsprechenden Gitterstrukturen und Reflektoren angeordnet sind.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

### KURZE BESCHREIBUNG DER ZEICHNUNGEN

Es zeigt
- Figur 1a: den Strahlengangverlauf des ersten Ausführungsbeispiels des erfindungsgemäßen Interferometers in einer ersten Aufspaltebene;
- Figur 1b: den Strahlengangverlauf des ersten Ausführungsbeispiels des erfindungsgemäßen Interferometers in einer ersten Vereinigungsebene;
- Figur 1c: den Strahlengangverlauf des ersten Ausführungsbeispiels des erfindungsgemäßen Interferometers in einer weiteren Ansicht;
- Figur 2a - 2d: jeweils eine Draufsicht auf verschiedene Bauteile des ersten Ausführungsbeispiels des erfindungsgemäßen Interferometers (Blickrichtung vom Messreflektor);
- Figur 3: das erste Ausführungsbeispiel des erfindungsgemäßen Interferometers in einer alternativen Darstellung;
- Figur 4a - 4c: jeweils eine Detaildarstellung einiger in Figur 3 gezeigter Komponenten des ersten Ausführungsbeispiels des erfindungsgemäßen Interferometers;
- Figur 5: den Strahlengangverlauf eines zweiten Ausführungsbeispiels des erfindungsgemäßen Interferometers in einer Ansicht analog zu Figur 1c;
- Figur 6: den Strahlengangverlauf eines dritten Ausführungsbeispiels des erfindungsgemäßen Interferometers in einer ersten Aufspaltebene;
- Figur 7: ein viertes Ausführungsbeispiel des erfindungsgemäßen Interferometers in einer Darstellung analog zu Figur 3;
- Figur 8a, 8b: jeweils eine Detaildarstellung von in Figur 7 gezeigten Komponenten des vierten Ausführungsbeispiels des erfindungsgemäßen Interferometers.

### BESCHREIBUNG DER AUSFÜHRUNGSFORMEN

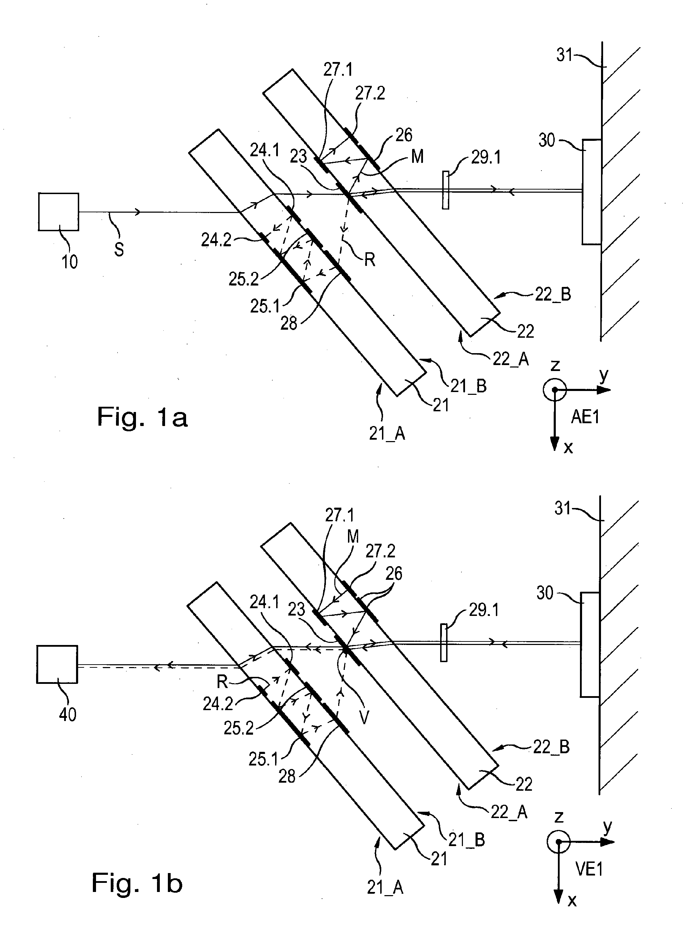

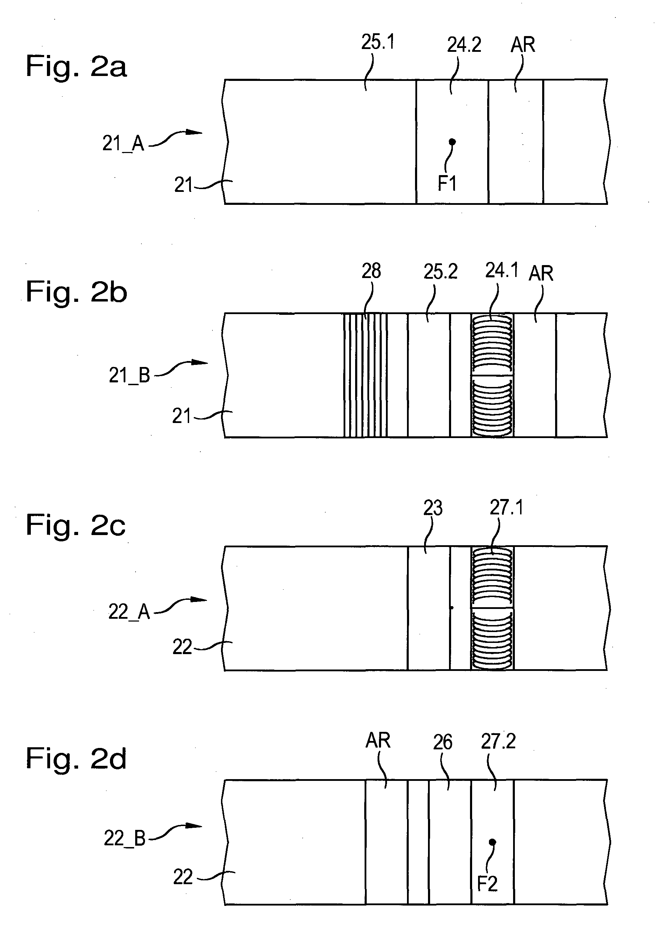

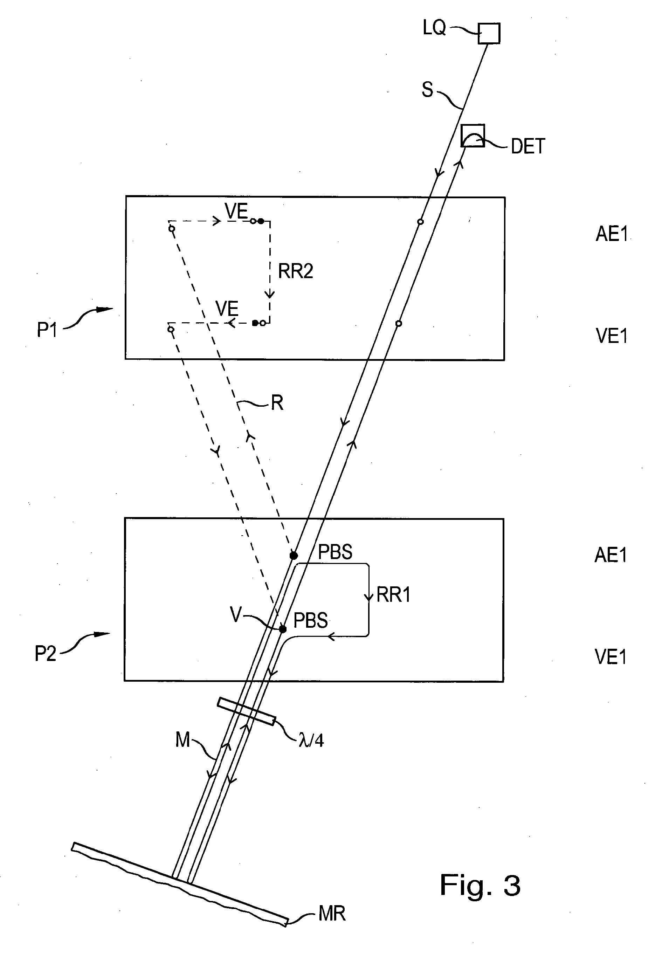

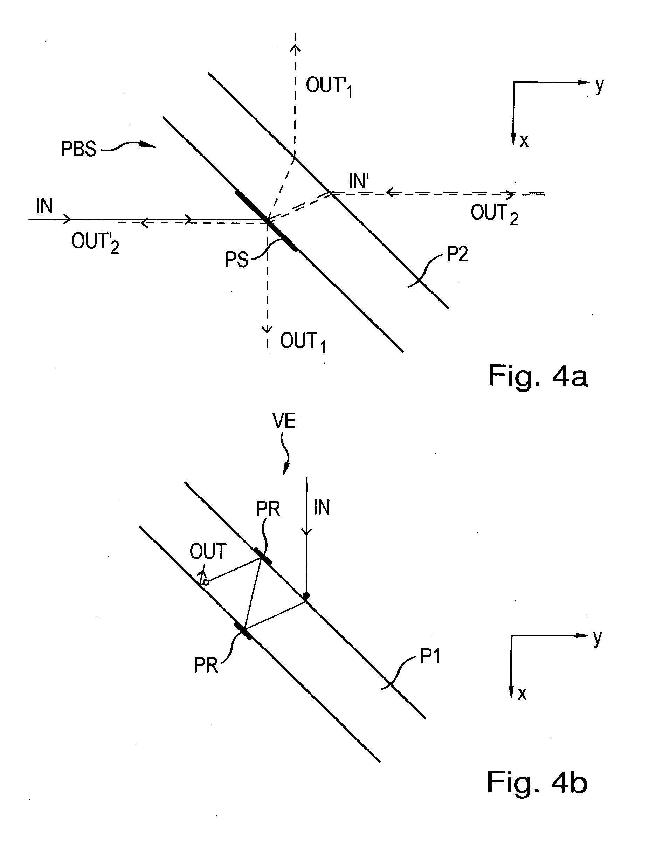

Ein erstes Ausführungsbeispiel des erfindungsgemäßen Interferometers wird nachfolgend anhand der Figuren 1a - 1c, 2a - 2d, 3 und 4a - 4c beschrieben. Die Figuren 1a - 1c zeigen hierbei den Strahlengangverlauf in unterschiedlichen Ansichten, die Figuren 2a - 2d Draufsichten auf verschiedene Interferometer-Komponenten aus der Blickrichtung des Messreflektors. Die Figuren 3 sowie 4a - 4c repräsentieren lediglich eine alternative, vereinfachte Darstellung des ersten Ausführungsbeispiels, auf die im Anschluss an die konkrete Beschreibung des Strahlengangverlaufs eingegangen wird.

Das erfindungsgemäße Interferometer umfasst mindestens eine Lichtquelle 10, einen Strahlteiler 23, einen Messreflektor 30, einen Referenz-Retroreflektor, eine Detektoranordnung 40 sowie zwei transparente Planplatten 21, 22. Die beiden Planplatten 21, 22, beispielsweise aus einem geeigneten Glasmaterial, sind parallel zueinander im Strahlengang zwischen der Lichtquelle 10 und der Detektoranordnung 40 angeordnet. Wie aus den Figuren 1a und 1b ersichtlich, sind die beiden Planplatten 21, 22 im vorliegenden Ausführungsbeispiel nicht-parallel zum Messreflektor 30 bzw. unter einem Winkel ungleich 90° gegenüber der Einfallsrichtung des Strahlenbündels S angeordnet. Der Messreflektor 30 ist mit einem Messobjekt 31 verbunden, das entlang einer Messrichtung beweglich gegenüber den restlichen Interferometer-Komponenten angeordnet ist. Im Folgenden sei die Messrichtung mit der Koordinate y bezeichnet. Beim Messobjekt 31 kann es sich z.B. um ein Maschinenteil handeln, das entlang der Messrichtung y verschiebbar ist. Mit Hilfe des erfindungsgemäßen Interferometers wird mindestens ein Abstandssignal bzgl. einer Verschiebung des Messobjekts 31 entlang der Messrichtung y ermittelt. Dieses Abstandssignal kann von einer - nicht dargestellten - Steuereinheit beispielsweise zu Positionierungszwecken genutzt werden.

Im Folgenden sei der Strahlengang zur Erzeugung des mindestens einen Abstandssignals im ersten Ausführungsbeispiel anhand der Figuren 1a - 1c sowie 2a - 2d erläutert.

Ein von einer Lichtquelle 10, beispielsweise einem geeigneten Laser, emittiertes Strahlenbündel S durchläuft gemäß Figur 1a in einer ersten Ebene, die nachfolgend als erste Aufspaltebene AE1 bezeichnet sei und mit der Zeichenebene von Figur 1a zusammenfällt, zunächst die erste transparente Planplatte 21. Hierbei besitzt das Strahlenbündel S eine lineare Polarisation; die Polarisationsebene ist unter 45° zur x- bzw. y-Achse orientiert. Das Strahlenbündel S erfährt beim Durchlaufen der Planplatte 21 lediglich an der Luft-Glas- bzw. Glas-Luft-Grenzfläche der ersten Planplatte 21 eine Ablenkung und propagiert in der mit x bezeichneten Richtung parallel versetzt zur Einfallsrichtung in Richtung der zweiten Planplatte 22. In den Figuren 2a und 2b, die Draufsichten auf die erste Seite 21_A und die zweite Seite 21_B der ersten Planplatte 21 zeigen, sind die Bereiche, in denen das Strahlenbündel S in die erste Planplatte 21 eintritt bzw. aus dieser wieder austritt mit AR bezeichnet; dort ist vorzugsweise eine antireflektierende Beschichtung aufgebracht.

Auf der zweiten Planplatte 22 trifft das Strahlenbündel S sodann auf den Strahlteiler 23. Dieser ist vorliegend als polarisationsoptische Strahlteilerschicht ausgebildet, die auf derjenigen Seite der zweiten Planplatte 22 angeordnet ist, die in Richtung der ersten Planplatte orientiert ist; nachfolgend sei diese Seite als erste Seite 22_A der zweiten Planplatte 22 bezeichnet. Alternativ wäre grds. auch möglich, den Strahlteiler 23 als Gitter auszubilden, das eine Gitterperiode besitzt, die kleiner als die Wellenlänge der verwendeten Lichtquelle 10 ist. Der Strahlteiler 23 spaltet das Strahlenbündel S in mindestens ein Messstrahlenbündel M und mindestens ein Referenzstrahlenbündel R auf, die aufgrund der gewählten Polarisation des Strahlenbündels S die gleiche Intensität besitzen und jeweils eine lineare Polarisation aufweisen, wobei die Polarisationsrichtungen orthogonal zueinander orientiert sind. Über diese Strahlenbündel M, R wird die bereits erwähnte erste Aufspaltebene AE1 aufgespannt, die identisch mit der Zeichenebene in Figur 1a ist. In den Figuren 1a - 1c ist ab der resultierenden Aufspaltung am Strahlteiler 23 das Messstrahlenbündel M durchgezogen dargestellt, das Referenzstrahlenbündel R strichliniert. Bis zur Wiedervereinigung an einem Vereinigungsort V in einer ersten Vereinigungsebene VE1, die mit der Zeichenebene der Figur 1b zusammenfällt, propagiert das Messstrahlenbündel M in einem Messarm und das Referenzstrahlenbündel R in einem Referenzarm. Die erste Vereinigungsebene VE1 ist in z-Richtung versetzt, parallel zur ersten Aufspaltebene AE1 angeordnet.

Im vorliegenden Ausführungsbeispiel bildet das vom Strahlteiler 23 durchgelassene, linear polarisierte Strahlenbündel das Messstrahlenbündel M; das vom Strahlteiler 23 reflektierte, orthogonal hierzu linear polarisierte Strahlenbündel fungiert als Referenzstrahlenbündel R.

Das Referenzstrahlenbündel R wird vom Strahlteiler 23 in Richtung der ersten Planplatte 21 zurückreflektiert und trifft dort auf ein Ablenkgitter 28, ausgebildet als Transmissionsgitter, das auf zweiten Seite 21_B der ersten Planplatte 21 angeordnet ist, welche in Richtung der zweiten Planplatte 22 orientiert ist. Über das Ablenkgitter 28 wird das Referenzstrahlenbündel R in Richtung eines planen Reflektors 25.1 umgelenkt, der auf der gegenüberliegenden ersten Seite 21_A der ersten Planplatte 21 angeordnet und dessen reflektierende Fläche in Richtung der gegenüberliegenden, zweiten Seite 21_B der ersten Planplatte 21 orientiert ist. Über den Reflektor 25.1 wird das Referenzstrahlenbündel R in Richtung eines weiteren planen Reflektors 25.2 auf der gegenüberliegenden zweiten Seite 21_B der ersten Planplatte 21 umgelenkt und dort erneut in Richtung des zuerst beaufschlagten Reflektors 25.1 umgelenkt. Nach der zweiten Reflexion am Reflektor 25.1 gelangt das Referenzstrahlenbündel R schließlich auf einen Referenz-Retroreflektor. Dieser bewirkt eine Rückreflexion des darauf einfallenden Referenzstrahlenbündels R in einer anderen Ebene und entgegengesetzt zur Einfallsrichtung.

Der hierzu verwendete Referenz-Retroreflektor ist als diffraktiver Retroreflektor ausgebildet und umfasst mindestens eine Gitterlinse 24.1 sowie einen planen Reflektor 24.2. Die Gitterlinse 24.1, im vorliegenden Ausführungsbeispiel ausgebildet als Reflexions-Gitterlinse, ist auf der zweiten Seite 21_B der ersten Planplatte 21 angeordnet, auf der gegenüberliegenden ersten Seite 21_A ist der plane Reflektor 24.2 platziert, dessen reflektierende Fläche in Richtung der Gitterlinse 24.1 orientiert ist. Die verwendete Reflexions-Gitterlinse ist als sog. Off-Axis-Linse ausgebildet, deren Fokus nicht auf einer fiktiven Linie liegt, die senkrecht auf der Linse steht und durch deren Mittelpunkt verläuft. Aufgrund dieser Ausbildung der Gitterlinse 24.1 ergibt sich darüber die gewünschte Umlenkung des einfallenden Strahlenbündels analog zu einem Tripel-Prisma.

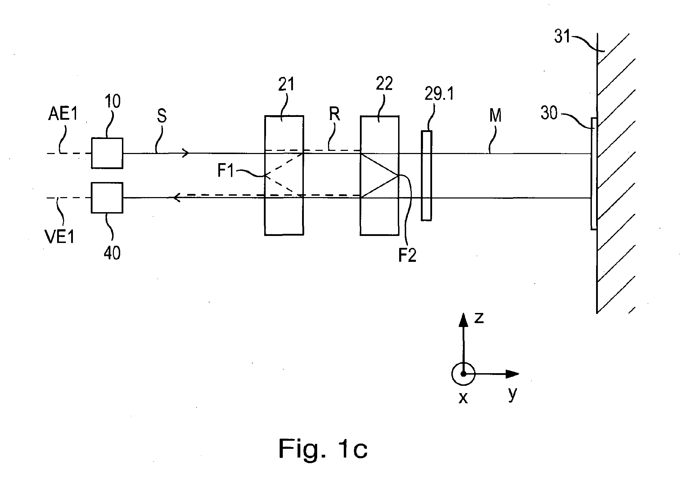

Über die Gitterlinse 24.1 resultiert somit eine Umlenkung des in der ersten Aufspaltebene AE1 darauf einfallenden, kollimierten Referenzstrahlenbündels R sowie eine Fokussierung auf den planen Reflektor 24.2. In Figur 1c bzw. 2a ist mit F1 der Auftreffpunkt des über die Gitterlinse 24.1 fokussierten Referenzstrahlenbündels R auf dem Reflektor 24.2 bezeichnet. Im Hinblick auf die resultierende Umlenkwirkung auf das Referenzstrahlenbündel R in der yz-Ebene sei etwa auf die Ansicht in Figur 1c verwiesen. Vom Reflektor 24.2 des Referenz-Retroreflektors wird das Referenzstrahlenbündel R schließlich in die erste Vereinigungsebene VE1 umgelenkt und durchläuft dann erneut die Gitterlinse 24.1; über diese wird das nunmehr divergent darauf einfallende Referenzstrahlenbündel R umgelenkt, wieder kollimiert und propagiert dann entgegengesetzt zur Einfallsrichtung in der Vereinigungsebene VE1 über die Reflektorelemente 25.2, 25.1 in Richtung des Ablenkgitters 28 auf der zweiten Seite 21_B der ersten Planplatte 21. Vom Ablenkgitter 28 resultiert eine weitere Umlenkung des Referenzstrahlenbündels R, so dass dieses schließlich in der Vereinigungsebene VE1 in Richtung des Vereinigungsorts V am Strahlteiler 23 weiterpropagiert.

Im dargestellten Ausführungsbeispiel des erfindungsgemäßen Interferometers werden separate Reflektoren 25.1, 24.2 auf der ersten Seite 21_A der ersten Planplatte 21 vorgesehen, die das Referenzstrahlenbündel R entlang seines Weges beaufschlagt. Selbstverständlich ist es alternativ möglich, hier lediglich einen einzigen planen Reflektor anzuordnen, der sich über einen hinreichend großen Bereich auf dieser Seite der ersten Planplatte 21 erstreckt.

Das am Strahlteiler 23 transmittierte, linear polarisierte Strahlenbündel fungiert wie bereits oben erwähnt als Messstrahlenbündel M und durchläuft zunächst die zweite Planplatte 22, die es an der zweiten Seite 22_B parallel, entlang der x-Richtung versetzt, verlässt. Das Messstrahlenbündel M propagiert sodann ein erstes Mal in Richtung des als Planspiegel ausgebildeten Messreflektors 30, auf den es senkrecht einfällt. Zwischen der zweiten Planplatte 22 und dem Messreflektor 30 ist eine λ/4-Platte 29.1 im Strahlengang des Messstrahlenbündels M angeordnet. Nach der Rückreflexion am Messreflektor 30 und dem zweiten Durchlaufen der λ/4-Platte 29.1 weist das Messstrahlenbündel M eine um 90° gedrehte Polarisation auf und wird vom Strahlteiler 23 in Richtung der zweiten Seite 22_B der zweiten Planplatte 22 reflektiert. Dort ist ein planer Reflektor 26 angeordnet, dessen reflektierende Fläche in Richtung der gegenüberliegenden ersten Seite 22_A der zweiten Planplatte 22 orientiert ist. Nach der Reflexion am Reflektor 26 gelangt das Messstrahlenbündel M dann auf einen Mess-Retroreflektor, der ebenfalls als diffraktiver Retroreflektor ausgebildet ist. Über den Mess-Retroreflektor wird eine Rückreflexion des darauf einfallenden Messstrahlenbündels M in einer anderen Ebene, nämlich in der ersten Vereinigungsebene VE1, und entgegengesetzt zur Einfallsrichtung bewirkt.

Der diffraktive Mess-Retroreflektor umfasst mindestens eine auf einer Seite 22_A der zweiten Planplatte 22 angeordnete Gitterlinse 27.1, hier ausgebildet als Reflexions-Gitterlinse bzw. Off-Axis-Gitterlinse, sowie einen auf der gegenüberliegenden Seite 22_B der zweiten Planplatte 22 angeordneten planen Reflektor 27.2, dessen reflektierende Seite in Richtung der Gitterlinse 27.1 orientiert ist. Der Mess-Retroreflektor bewirkt vergleichbar zum Referenz-Retroreflektor eine Rückreflexion des in der ersten Aufspaltebene AE1 darauf einfallenden Strahlenbündels, in diesem Fall also des Messstrahlenbündels M, in einer anderen Ebene, nämlich der ersten Vereinigungsebene VE1, und entgegengesetzt zur Einfallsrichtung.

Über die Gitterlinse 27.1 resultiert eine Umlenkung des in der ersten Aufspaltebene AE1 einfallenden Messstrahlenbündels M sowie eine Fokussierung auf den gegenüberliegenden planen Reflektor 27.2. In den Figuren 1c und 2d ist der Auftreffpunkt des fokussierten Messstrahlenbündels M auf dem Reflektor 27.2 mit F2 bezeichnet. Im Hinblick auf die resultierende Umlenkwirkung auf das Messstrahlenbündel M sei wiederum auf die Ansicht in Figur 1c verwiesen. Vom Reflektor 27.2 wird das Messstrahlenbündel M schließlich in die erste Vereinigungsebene VE1 reflektiert bzw. umgelenkt und durchläuft dann erneut die Gitterlinse 27.1. Über die Gitterlinse 27.1 wird das divergent einfallende Messstrahlenbündel M umgelenkt, wieder kollimiert und propagiert dann in umgekehrter Richtung wie beim Einfall über das Reflektorelement 26 in Richtung des Strahlteilers 23. Am Strahlteiler 23 resultiert eine Reflexion des linear polarisierten Messstrahlenbündels M in der ersten Vereinigungsebene VE1 in Richtung des Messreflektors 30, der anschließend ein zweites Mal vom Messstrahlenbündel M beaufschlagt wird, wobei das Messstrahlenbündel M wiederum senkrecht auf den Messreflektor 30 einfällt. Nach der zweiten Reflexion des Messstrahlenbündels M am Messreflektor 30 und dem erneuten zweimaligen Passieren der λ/4-Platte 29.1 propagiert das Messstrahlenbündel M sodann in der ersten Vereinigungsebene VE1 zum Vereinigungsort V am Strahlteiler 23. Da das Messstrahlenbündel M nunmehr eine um 90° gedrehte Polarisation aufweist, wird es vom Strahlteiler 23 transmittiert und propagiert überlagert mit dem Referenzstrahlenbündel R in Richtung der Detektoranordnung 40. Über die Detektoranordnung 40 ist mindestens ein erstes Abstandssignal aus den am Vereinigungsort V überlagerten und interferierenden Mess- und Referenzstrahlenbündeln M, R bezüglich der Position des Messobjekts 31 erfassbar.

In Bezug auf die Ausbildung der Detektoranordnung 40 gibt es verschiedene bekannte Möglichkeiten, die nachfolgend lediglich kurz angedeutet werden. So kann in einer ersten Variante die Detektoranordnung eingangsseitig eine λ/4-Platte umfassen; dieser ist ein Aufspaltgitter nachgeordnet, das das darauf einfallende Licht in drei Strahlenbündel gleicher Intensität aufspaltet. In den Strahlengängen dieser aufgespaltenen Strahlenbündel ist jeweils ein Polarisationsfilter angeordnet, wobei deren Polarisationsrichtungen um jeweils 120° verdreht zueinander sind. Den Polarisationsfiltern ist wiederum jeweils ein elektrooptisches Detektorelement nachgeordnet. An diesen resultieren schließlich drei um 120° phasenverschobene Abstandssignale, die von der jeweiligen Folgeelektronik weiterverarbeitbar sind.

Daneben können natürlich auch noch andere Varianten von Detektoranordnungen zur Erzeugung mehrerer phasenverschobener Abstandssignale aus zwei kollinear überlagerten, orthogonal polarisierten Teilstrahlenbündeln zum Einsatz kommen. Hierbei können sowohl linear orthogonale als auch zirkular orthogonale Polarisationen verwendet werden, die sich durch eine λ/4-Platte gegenseitig überführen lassen.

Analog zur ersten Planplatte 21 kann auch auf Seiten der zweiten Seite 22_B der zweiten Planplatte 22 vorgesehen werden, dort anstelle der beiden Reflektoren 26, 27.2 lediglich einen einzigen Reflektor anzuordnen, der eine hinreichend große Fläche besitzt.

Eine alternative Darstellung des ersten Ausführungsbeispiels des erfindungsgemäßen Interferometers wird nachfolgend anhand der Figuren 3 sowie 4a - 4c erläutert. Hierbei zeigt Figur 3 eine alternative Strahlengangdarstellung, in den Figuren 4a - 4c sind die maßgeblichen optischen Funktions-Komponenten aus Figur 3 im Detail veranschaulicht.

Figur 3 zeigt in stark schematisierter Form die Lichtquelle LQ, die beiden Planplatten P1, P2, den Messreflektor MR sowie die Detektoranordnung DET. Auf Seiten der beiden Planplatten P1, P2 sind die optischen Komponenten PBS, VE, RR1, RR2 lediglich schematisiert angedeutet. Im einzelnen handelt es sich bei der Komponente PBS um den Strahlteiler in der zweiten Planplatte P2, VE bezeichnet jeweils Verzögerungseinheiten in der ersten Planplatte P1, mit RR1, RR2 werden jeweils Retroreflektoren in der zweiten und ersten Planplatte P2, P1 bezeichnet, wobei RR1 den Mess-Retroreflektor darstellt, RR2 den Referenz-Retroreflektor; mit dem Bezugszeichen λ/4 wird eine λ/4-Platte im Messarm bezeichnet. Ebenfalls in Figur 3 angedeutet ist die oben erwähnte erste Aufspaltebene AE1 sowie die erste Vereinigungsebene VE1.

Wie aus Figur 3 ersichtlich, trifft das von der Lichtquelle LQ emittierte Strahlenbündel S auf den Strahlteiler PBS in der zweiten Planplatte P2 und wird darüber in ein Messstrahlenbündel M und ein Referenzstrahlenbündel R aufgespalten, die anschließend bis zur Wiedervereinigung in einem Mess-und einem Referenzarm propagieren.

Das Referenzstrahlenbündel R propagiert nach der Aufspaltung in Richtung der ersten Planplatte P1, durchläuft dort zunächst in der ersten Aufspaltebene AE1 die Verzögerungseinheit VE in einer ersten Durchlauf-Richtung, erfährt dann über den Referenz-Retroreflektor RR2 eine Retroreflexion und eine Umlenkung in die erste Vereinigungsebene VE1. Anschließend durchläuft das Referenzstrahlenbündel R in der ersten Vereinigungsebene VE1 die Verzögerungseinheit VE entgegengesetzt zur ersten Durchlauf-Richtung und gelangt dann auf den Wiedervereinigungsort V auf dem Strahlteiler PBS.

Das Messstrahlenbündel M propagiert nach der Aufspaltung in der ersten Aufspaltebene AE1 ein erstes Mal durch die λ/4-Platte λ/4 in Richtung des Messreflektors MR und wird davon in Richtung der zweiten Planplatte P2 zurückreflektiert. Dort gelangt es auf den Mess-Retroreflektor RR1, über den eine Retroreflexion und Umlenkung in die erste Vereinigungsebene VE1 resultiert. Sodann propagiert das Messstrahlenbündel M ein zweites Mal in Richtung des Messreflektors MR und wird in der ersten Vereinigungsebene VE1 in Richtung des Vereinigungsorts V auf dem Strahlteiler PBS zurückreflektiert, wo es zu interferierenden Überlagerung mit dem Referenzstrahlenbündel R kommt. Anschließend propagiert das Paar überlagerter Strahlenbündel M, R in Richtung der Detektoranordnung DET, über die mindestens ein Abstandssignal erzeugbar ist.

Figur 4a zeigt in einer detaillierteren Darstellung den Strahlteiler PBS, der eine polarisationsoptische Strahlteilerschicht PS umfasst, die in der zweiten Planplatte P2 ausgebildet ist sowie die am Strahlteiler PBS resultierenden, maßgeblichen Strahlengänge. So wird das aus der Einfallsrichtung IN einfallende Strahlenbündel zunächst in ein Referenzstrahlenbündel und ein Messstrahlenbündel aufgespalten, deren Ausbreitungsrichtungen in dieser Darstellung mit OUT₁ (Referenzstrahlenbündel) und OUT₂ (Messstrahlenbündel) bezeichnet werden. Das Messstrahlenbündel trifft nach der ersten Rückreflexion am - nicht dargestellten - Messreflektor wiederum auf den Strahlteiler PBS bzw. die polarisationsoptische Strahlteilerschicht PS und wird nunmehr in die Ausbreitungsrichtung OUT₁' reflektiert; nach der zweiten Rückreflexion am Messreflektor gelangt es erneut auf den Strahlteiler PBS bzw. die polarisationsoptische Strahlteilerschicht PS und wird zusammen mit dem Referenzstrahlenbündel entgegengesetzt zur Einfallsrichtung IN entlang der Ausfallsrichtung OUT₂' in Richtung der - ebenfalls nicht gezeigten - Detektoranordnung transmittiert.

In Figur 4b ist der Strahlengang in der in der ersten Planplatte P1 vorgesehenen Verzögerungseinheit VE schematisiert gezeigt. Das aus der Einfallsrichtung IN auf die Verzögerungseinheit VE einfallende Referenzstrahlenbündel propagiert in der ersten Planplatte P1 hierbei ein erstes Mal entlang bzw. durch die Verzögerungseinheit VE; nach der Retroreflexion durchläuft es die Verzögerungseinheit VE ein zweites Mal in umgekehrter Richtung. Die Verzögerungseinheit VE umfasst mindestens zwei plane Reflektoren PR, die an den gegenüberliegenden Seiten der ersten Planplatte P1 angeordnet sind. Hierbei sind die reflektierenden Flächen der Reflektoren PR jeweils in Richtung der gegenüberliegenden Seite der ersten Planplatte P1 orientiert. Selbstverständlich können auch mehr als zwei Reflektoren PR in der Verzögerungseinheit vorgesehen werden; zudem können im Strahlengang in der Verzögerungseinheit VE Ablenkgitter angeordnet werden, um das Referenzstrahlenbündel geeignet umzulenken.

Über die Verzögerungseinheit VE kann somit definiert der in einer Planplatte P1 bzw. der in Glas durchlaufene optische Weg des Referenzstrahlenbündels eingestellt werden. Dies erfolgt vorzugsweise so, dass das Referenzstrahlenbündel und das Messstrahlenbündel zwischen der Aufspaltung und der Wiedervereinigung identische Wege in den beiden Planplatten P1, P2 bzw. in Glas durchlaufen haben. Auf diese Art und Weise ergibt sich eine Temperaturstabilisierung des erfindungsgemäßen Interferometers, d.h. eventuelle Temperaturänderungen beeinflussen die Strahlwege der Mess-und Referenzstrahlenbündel in Luft und Glas identisch. Es resultieren auch bei homogenen Temperaturschwankungen keine Fehlmessungen. Als vorteilhaft erweist sich in diesem Zusammenhang desweiteren, wenn durch eine geeignete konstruktive Ausgestaltung dafür gesorgt wird, dass die beiden Planplatten in etwa die gleiche Temperatur aufweisen.

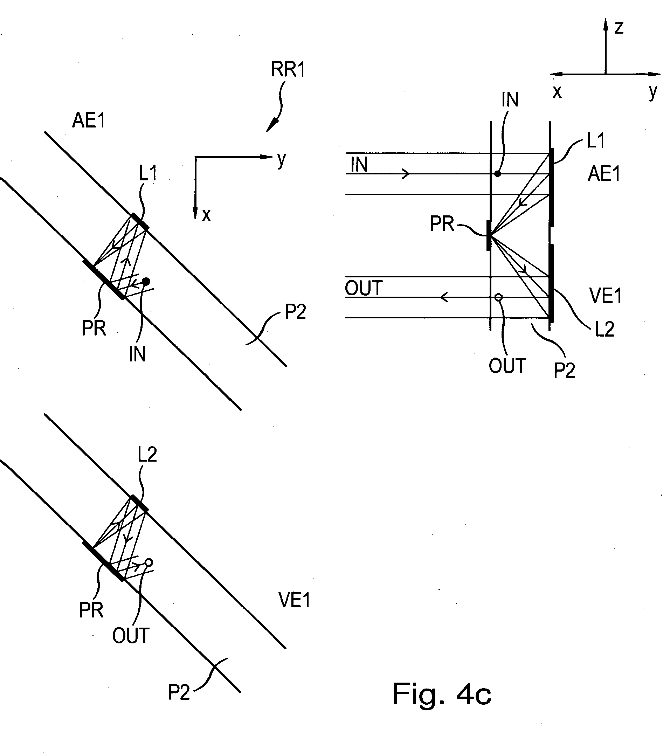

Die Figur 4c veranschaulicht im Detail den Strahlengang des Messstrahlenbündels im Mess-Retroreflektor RR1. Prinzipiell analog hierzu verläuft der Strahlengang des Referenzstrahlenbündels im Referenz-Retroreflektor RR2, auf dessen detaillierte Beschreibung verzichtet wird.

Im linken Teil der Figur 4c sind die Strahlengänge im Mess-Retroreflektor RR1 der zweiten Planplatte P2 in der ersten Aufspaltebene AE1 sowie in der ersten Vereinigungsebene VE1 gezeigt, rechts ist eine seitliche Ansicht des Strahlengangs im Mess-Retroreflektor RR1 ersichtlich. In der ersten Aufspaltebene AE1 trifft das aus der Einfallsrichtung IN einfallende Messstrahlenbündel nach einer Umlenkung am planen Reflektor PR auf eine erste Gitterlinse L1, die eine Brennweite f besitzt und als Reflexions-Gitterlinse ausgebildet ist. Gemäß der rechts dargestellten, seitlichen Ansicht bewirkt die erste Gitterlinse L1 eine Umlenkung des einfallenden Messstrahlenbündels nach unten sowie eine Fokussierung auf einen gegenüberliegenden planen Reflektor PR. Dieser lenkt das Messstrahlenbündel dann zurück in Richtung der gegenüberliegenden zweiten Gitterlinse L2. Das divergierend auf die zweite Gitterlinse L2 einfallende Messstrahlenbündel wird nunmehr von der zweiten Gitterlinse L2 so umgelenkt, dass dieses den Mess-Retroreflektor RR1 in der Ausfallsrichtung OUT verlässt, wobei die Ausfallsrichtung entgegengesetzt zur Einfallsrichtung IN orientiert ist. Ferner bewirkt die zweite Gitterlinse L2, dass das divergierend darauf einfallende Messstrahlenbündel wieder kollimiert wird. Über den Mess-Retroreflektor RR1 wird somit eine Retroreflexion des einfallenden Messstrahlenbündels und ein gleichzeitiger Versatz desselbigen, hier in z-Richtung, bewirkt. Durch den schrägen Einfall des Messstrahlenbündels gemäß den linken Darstellungen in Figur 4c erfolgt eine räumliche Trennung der verschiedenen Beugungsordnungen der Reflexions-Gitterlinsen. Störende Beugungsordnungen, die durch die Toleranzen der Gitterherstellung nie ganz unterdrückt werden können, lassen sich damit leicht durch mechanische Blenden vollständig absorbieren. Dies ist insbesondere deshalb wichtig, da schon schwache Störstrahlenbündel durch Interferenz erhebliche Störungen auf das Messstrahlenbündel haben könnten.

Prinzipiell analog hierzu ist auch der Referenz-Retroreflektor RR2 in der ersten Planplatte P1 ausgebildet, d.h. ebenfalls als diffraktiver Retroreflektor. Dieser umfasst i.w. wiederum zwei Gitterlinsen in Form von Reflexions-Gitterlinsen, die auf einer Seite der ersten Planplatte P1 angeordnet sind sowie einen auf der gegenüberliegenden Seite angeordneten planen Reflektor.

Das im Detail erläuterte erste Ausführungsbeispiel kann im Rahmen der vorliegenden Erfindung selbstverständlich abgewandelt und modifiziert werden.

So ist es z.B. möglich, in der zweiten Planplatte 22 die Anordnung der Komponenten des Mess-Retroreflektors dahingehend abzuändern, dass die beiden Gitterlinsen auf der zweiten Seite der zweiten Planplatte angeordnet werden und der plane Reflektor auf der ersten Seite. In diesem Fall würde das vom Messreflektor zurückreflektierte Messstrahlenbündel vom Strahlteiler auf der ersten Seite der zweiten Planplatte auf die Gitterlinse auf der zweiten Seite umgelenkt, dann in Richtung des Reflektors umgelenkt und fokussiert, dann auf die Gitterlinse auf der zweiten Seite reflektiert und darüber entgegengesetzt zur Einfallsrichtung umgelenkt und wieder kollimiert.

Desweiteren ist es möglich, in der zweiten Planplatte 22 eine alternative Führung des Strahlengangs des Referenzstrahlenbündels R vorzusehen. So war im oben erläuterten Beispiel vorgesehen, dass das vom Strahlteiler 23 her erstmalig einfallende Referenzstrahlenbündel R über das Ablenkgitter 28 auf der zweiten Seite 21_B der ersten Planplatte 21 in Richtung der Lichtquelle 10 abgelenkt wird, bevor es nach mehreren Reflexionen an Reflektoren 25.1, 25.2 der Verzögerungseinheit auf den Referenz-Retroreflektor einfällt. Im Unterschied hierzu kann das Ablenkgitter auch weggelassen werden, so dass das Referenzstrahlenbündel in der ersten Planplatte zunächst in der anderen Richtung, d.h. weg von der Lichtquelle, propagiert. Als Vorteil einer solchen Variante wäre deren kompakter Aufbau zu erwähnen, wenn darüber ein Mehrachs-Interferometer aufgebaut werden soll.

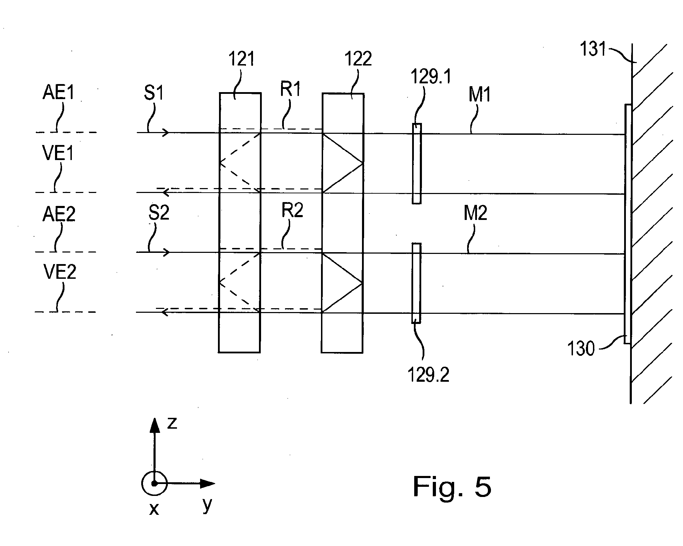

Ein zweites Ausführungsbeispiel des erfindungsgemäßen Interferometers sei nachfolgend anhand der Figur 5 erläutert, das als sog. Zwei-Achs-Interferometer ausgebildet ist. Die Figur zeigt eine Strahlengangdarstellung analog zur oben bereits erläuterten Figur 1c des ersten Ausführungsbeispiels. Nachfolgend seien lediglich die maßgeblichen Unterschiede zum ersten Ausführungsbeispiel erläutert.

Im zweiten Ausführungsbeispiel des erfindungsgemäßen Interferometers ist vorgesehen, neben einer ersten Messachse eine zweite Messachse entlang der Messrichtung y auszubilden, die in der angegebenen z-Richtung beabstandet zur ersten Messachse verläuft. Die erste Messachse wird hierbei durch ein erstes Messstrahlenbündel M1 gebildet, das in Verbindung mit dem ersten Referenzstrahlenbündel R1 einen identischen Strahlengangverlauf wie im ersten Ausführungsbeispiel aufweist. Die zweite Messachse wird senkrecht beabstandet zur ersten Aufspaltebene AE1 ausgebildet, indem ein zweites Strahlenbündel S2, in z-Richtung beabstandet in einer zweiten Aufspaltebene AE2 auf die erste Planplatte 121 einfällt und ein zweites Messstrahlenbündel M2 sowie ein zweites Referenzstrahlenbündel R2 resultiert; die beiden Messstrahlenbündel M1, M2 durchlaufen auf ihren jeweiligen Wegen zwischen der zweiten Planplatte 122 und dem Messreflektor 130 jeweils wieder λ/4-Platten 129.1, 129.2. Über das zweite Messstrahlenbündel M2 ist somit die zweite Messachse dieses Ausführungsbeispiels definiert. Die beiden Planplatten 121, 122 sind hierzu in einem weiteren Bereich so ausgebildet, dass in Bezug auf das zweite einfallende Strahlenbündel S2 in einer zweiten Aufspaltebene AE2 und in einer zweiten Vereinigungsebene VE2 ein identischer Strahlverlauf wie in den ersten Aufspalt- und Vereinigungsebenen AE1, VE1 für das erste einfallende Strahlenbündel S1 resultiert und darüber ein zweites Abstandssignal erzeugbar ist. Auch für eine zweite Messachse entlang der Messrichtung y resultiert somit kein erheblicher Mehraufwand durch zusätzliche Optikkomponenten. Die zweite Messachse kann mittels der zwei vorhandenen Planplatten realisiert werden, die lediglich in weiteren Bereichen identisch wie in Bezug auf die erste Messachse ausgebildet werden muss. In diesen weiteren Bereichen sind die entsprechenden Interferometer-Komponenten in Form von Strahlteilern, Reflektoren, Gitterlinsen etc. durch entsprechende Lithographieverfahren aufzubringen.

Es ist mittels dieser Ausführungsform des erfindungsgemäßen Interferometers als Zwei-Achs-Interferometer nunmehr möglich, neben der rein translatorischen Bewegung entlang der y-Richtung auch eine eventuelle Verkippung des Messobjekts 131 um die x-Achse messtechnisch zu erfassen. Dabei kann eine einzige Lichtquelle zur Erfassung der beiden Freiheitsgrade bzw. Achsen verwendet werden. Die Aufspaltung des von der Lichtquelle emittierten Strahlenbündels und die Zuführung zu den beiden Achsen kann dabei faseroptisch erfolgen, z.B. mit Hilfe eines sog. Fasersplitters. Ebenso möglich ist aber natürlich auch eine Aufspaltung mittels bekannter Optikelemente wie Strahlteiler, ausgebildet als Dünnschichtstrahlteiler, Strahlteilerwürfel oder Strahlteilergitter oder aber mittels Umlenkspiegel.

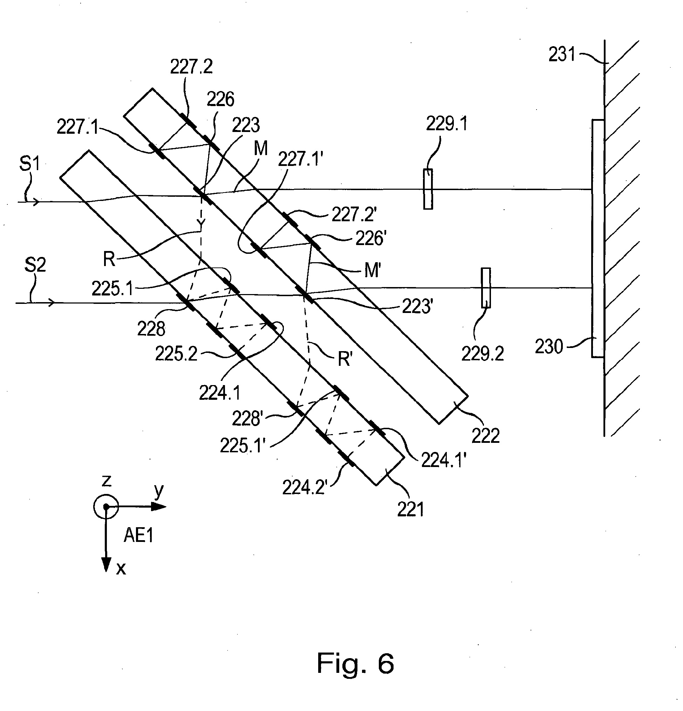

Ein drittes Ausführungsbeispiel des erfindungsgemäßen Interferometers, wiederum ausgebildet als Zwei-Achs-Interferometer, ist in Figur 6 gezeigt. Diese Figur zeigt eine Strahlengangdarstellung in der ersten Aufspaltebene AE1 analog zur Figur 1a des ersten Ausführungsbeispiels. Im Folgenden werden erneut nur die die maßgeblichen Unterschiede zum ersten Ausführungsbeispiel erläutert.

Auch im dritten Ausführungsbeispiel des erfindungsgemäßen Interferometers ist vorgesehen, neben einer ersten Messachse mit den Mess- und Referenzstrahlenbündeln M, R eine zweite Messachse mit den Mess- und Referenzstrahlenbündeln M', R' entlang der Messrichtung y auszubilden. Die zweite Messachse bzw. das zweite Messstrahlenbündel M' verläuft im Unterschied zum vorhergehenden Ausführungsbeispiel nunmehr jedoch in x-Richtung beabstandet zur ersten Messachse mit dem ersten Messstrahlenbündel M.

Zur Ausbildung der zweiten Messachse entlang der Messrichtung y ist demzufolge vorgesehen, dass in der ersten Aufspaltebene AE1 ein zweites Strahlenbündel S2, in x-Richtung beabstandet auf die erste Planplatte 221einfällt. Die beiden Planplatten 221, 222 sind jeweils in einem weiteren Bereich so ausgebildet, dass in Bezug auf das zweite einfallende Strahlenbündel in der ersten Aufspaltebene AE1 und in der ersten Vereinigungsebene ein identischer Strahlengangverlauf wie beim ersten einfallenden Strahlenbündel S1 resultiert und darüber ein zweites Abstandssignal erzeugbar ist.

Wie aus Figur 6 ersichtlich, weist die zweite Planplatte 222 im linken Teil die bereits oben erläuterten Komponenten 223, 226, 227.1, 227.2 auf, die identisch zum ersten Ausführungsbeispiel vom ersten Messstrahlenbündel M beaufschlagt werden. Ein zweiter Satz derartiger Komponenten 223', 226', 227.1', 227.2' ist im rechten Teil der zweiten Planplatte 222 angeordnet und wird analog vom zweiten Messstrahlenbündel M' beaufschlagt.

Ebenso sind im linken Teil der ersten Planplatte 221 die verschiedenen Komponenten 228, 225.1, 225.2, 224.1, 224.2 für das erste Referenzstrahlenbündel R vorgesehen, die wiederum identisch zum ersten Ausführungsbeispiel beaufschlagt werden. Ein zweiter Satz derartiger Komponenten 228', 225.1', 225.2', 224.1', 224.2' ist im rechten Teil der ersten Planplatte 221 angeordnet, wobei diese wiederum analog vom zweiten Referenzstrahlenbündel R' beaufschlagt werden.

Es lässt sich in der - nicht dargestellten - ersten Vereinigungsebene somit aus der interferierenden Überlagerung des zweiten Messstrahlenbündels M' mit dem zweiten Referenzstrahlenbündel R' ein zweites Abstandssignal bzgl. einer Verschiebung des Objekts 231 entlang der Messrichtung y erzeugen. Neben der rein translatorischen Bewegung entlang der y-Richtung kann mit Hilfe dieser Ausführungsform des erfindungsgemäßen Interferometers auch eine eventuelle Verkippung des Messobjekts 231 um die z-Achse messtechnisch erfasst werden. In Bezug auf die Ausbildung der Lichtquelle und der Detektoranordnung sei auf die Ausführungen zu den vorhergehenden Ausführungsbeispielen verwiesen.

Die bislang erläuterten Varianten bzw. Ausführungsbeispiele des erfindungsgemäßen Interferometers als Ein- und Zwei-Achs-Interferometer lassen sich je nach Anwendung geeignet kombinieren, um auf diese Art und Weise auch Drei- und Vier-Achs-Interferometer auszubilden.

Beispielsweise kann eine Kombination des zweiten und dritten Ausführungsbeispiels vorgesehen werden, um auf diese Art und Weise ein Drei-Achs-Interferometer auszubilden. Dieses besitzt dann eine erste Messachse gemäß dem ersten Ausführungsbeispiel entlang der Messrichtung y, eine in z-Richtung beabstandete zweite Messachse gemäß dem zweiten Ausführungsbeispiel sowie eine in x-Richtung beabstandete dritte Messachse gemäß dem dritten Ausführungsbeispiel. Neben der Erfassung einer translatorischen Objektbewegung entlang der Messrichtung y lassen sich damit auch Rotationsbewegungen des Objekts um die Achsen x und z erfassen.

Ein Vier-Achs-Interferometer könnte im Bedarfsfall aus der Kombination des zweiten und dritten Ausführungsbeispiels ausgebildet werden, also durch eine Kombination von zwei ineinander verschachtelten Messachsen gemäß Figur 6, übereinander angeordnet gemäß Figur 5 usw..

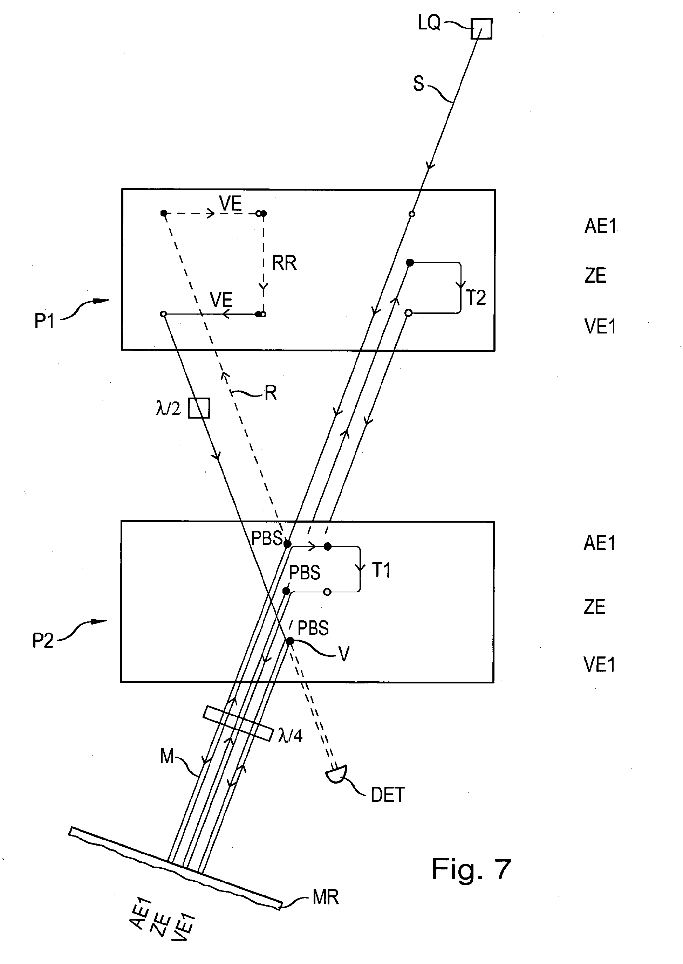

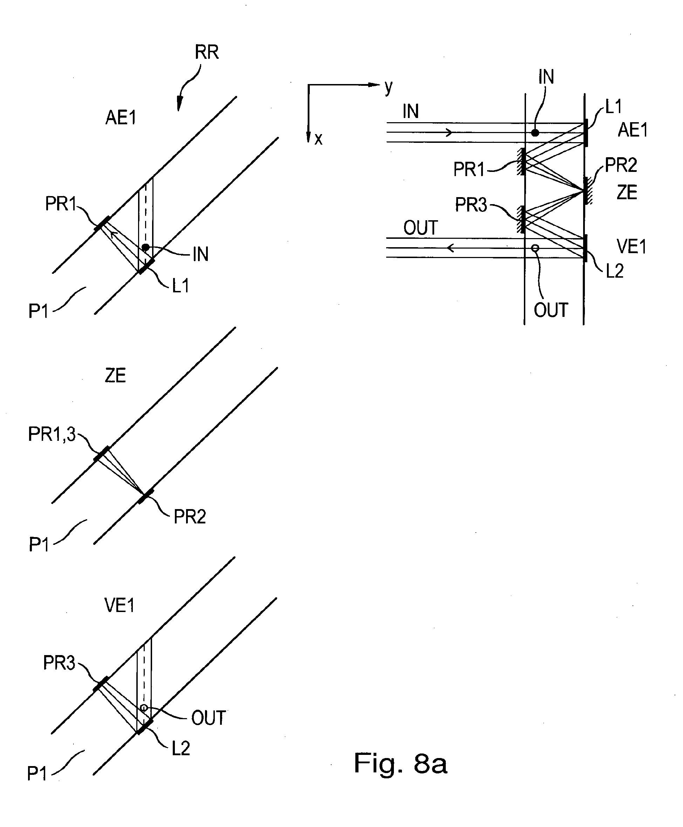

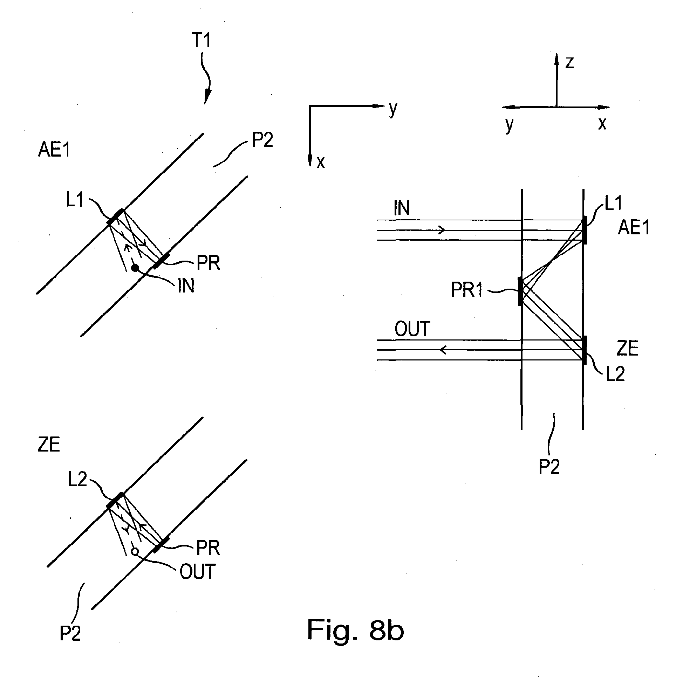

Ein weiteres, viertes Ausführungsbeispiel des erfindungsgemäßen Interferometers sei abschließend anhand der Figuren 7 sowie 8a und 8b erläutert. Dabei zeigt Figur 7 eine Strahlengangdarstellung gemäß der bereits oben verwendeten alternativen Darstellung des ersten Ausführungsbeispiels in Figur 3; die Figuren 8a, 8b veranschaulichen einzelne der optischen Komponenten aus Figur 7 im Detail.

Figur 7 zeigt in stark schematisierter Form eine vierte Ausführungsform des erfindungsgemäßen Interferometers mit einer Lichtquelle LQ, zwei Planplatten P1, P2, einem Messreflektor MR sowie einer Detektoranordnung DET. Auf Seiten der beiden Planplatten P1, P2 sind die optischen Komponenten PBS, VE, RR, T1, T2 wiederum nur schematisiert angedeutet; im einzelnen handelt es sich bei der Komponente PBS um einen Strahlteiler in der zweiten Planplatte P2, VE bezeichnet jeweils Verzögerungseinheiten in der ersten Planplatte P1, mit RR wird ein vorgesehener Referenz-Retroreflektor in der ersten Planplatte P1 bezeichnet und mit T1, T2 ein erstes und zweites Abbildungselement in der zweiten und ersten Planplatte P2, P1. Desweiteren sind wie aus der Figur ersichtlich in den verschiedenen Strahlengängen eine λ/2-Platte sowie eine λ/4-Platte angeordnet. Ebenfalls in Figur 7 angedeutet sind eine erste Aufspaltebene AE1, eine Zwischenebene ZE sowie eine erste Vereinigungsebene VE1.

Gemäß Figur 7 trifft das von der Lichtquelle LQ emittierte Strahlenbündel S auf den Strahlteiler PBS in der zweiten Planplatte P2 und wird darüber in ein Messstrahlenbündel M und ein Referenzstrahlenbündel R aufgespalten. Die Strahlenbündel M, R propagieren anschließend bis zur Wiedervereinigung am Vereinigungsort V auf dem Strahlteiler PBS analog zu den vorhergehenden Ausführungsbeispielen in einem Messarm und in einem Referenzarm.

Das Referenzstrahlenbündel R propagiert nach der Aufspaltung am Strahlteiler PBS zunächst in Richtung der ersten Planplatte P1, durchläuft dort zunächst in der ersten Aufspaltebene AE1 die Verzögerungseinheit VE in einer ersten Durchlauf-Richtung und erfährt dann über den Referenz-Retroreflektor RR eine Retroreflexion und eine Umlenkung in die erste Vereinigungsebene VE1. Anschließend durchläuft das Referenzstrahlenbündel R in der ersten Vereinigungsebene VE1 die Verzögerungseinheit VE in einer zweiten Durchlaufrichtung entgegengesetzt zur ersten Durchlauf-Richtung und gelangt schließlich nach dem Durchlaufen einer λ/2-Platte auf den Wiedervereinigungsort V auf dem Strahlteiler PBS in der ersten Vereinigungsebene VE1 der zweiten Planplatte P2. Über die λ/2-Platte erfährt das Referenzstrahlenbündel R eine Drehung seiner Polarisationsrichtung um 90°, so dass am Wiedervereinigungsort V zwei orthogonal zueinander polarisierte Strahlenbündel vorliegen, die dann wie oben erläutert polarisationsoptisch ausgewertet werden können.

Das Messstrahlenbündel M propagiert nach der Aufspaltung am Strahlteiler PBS in der ersten Aufspaltebene AE1 ein erstes Mal in Richtung des Messreflektors MR und wird davon in Richtung der zweiten Planplatte P2 in der gleichen Ebene zurückreflektiert. Dabei durchläuft das Messstrahlenbündel M zweimal eine λ/4-Platte und weist nach dem zweiten Durchlauf eine um 90° verdrehte Polarisation auf. Das derart polarisierte Messstrahlenbündel M wird vom Strahlteiler PBS in der zweiten Planplatte P2 nunmehr reflektiert und gelangt dann auf das erste Abbildungselement T1 in der zweiten Planplatte P2. Über das erste Abbildungselement T1 erfolgt eine Abbildung und Ablenkung des Messstrahlenbündels M in eine Zwischenebene ZE, die parallel zur ersten Aufspaltebene AE1 orientiert und zwischen der ersten Aufspaltebene AE1 und der ersten Vereinigungsebene VE1 angeordnet ist. In der Zwischenebene ZE wird das Messstrahlenbündel M dann über den Strahlteiler PBS ein zweites Mal in Richtung des Messreflektors MR umgelenkt. Vom Messreflektor MR resultiert sodann eine zweite Rückreflexion in Richtung der zweiten Planplatte P2. Nach dem erneuten zweimaligen Durchlaufen der λ/4-Platte besitzt das Messstrahlenbündel M nunmehr eine Polarisation dergestalt, dass es vom Strahlteiler PBS in Richtung der ersten Planplatte P1 transmittiert wird. In der Zwischenebene ZE propagiert das Messstrahlenbündel M dann zur ersten Planplatte P1 und trifft dort auf das zweite Abbildungselement T2. Über das zweite Abbildungselement T2 resultiert eine Abbildung und Ablenkung des Messstrahlenbündels M von der Zwischenebene ZE in die erste Vereinigungsebene VE1, wo das Messstrahlenbündel M sodann in Richtung des Strahlteilers PBS in der zweiten Planplatte P2 propagiert. Das Messstrahlenbündel M wird vom Strahlteiler PBS transmittiert und propagiert dann ein drittes Mal in Richtung des Messreflektors MR, nunmehr in der ersten Vereinigungsebene VE1. Nach der erneuten bzw. dritten Rückreflexion am Messreflektor MR und dem wiederum zweimaligen Durchlaufen der λ/4-Platte besitzt das Messstrahlenbündel M wieder eine um 90° verdrehte Polarisation und wird am Vereinigungsort V vom Strahlteiler PBS zusammen mit dem Referenzstrahlenbündel R in Richtung der Detektoranordnung DET reflektiert. Anschließend propagiert das Paar überlagerter, interferierender Strahlenbündel M, R in Richtung der Detektoranordnung DET, über die mindestens ein Abstandssignal in einer Art und Weise erzeugbar ist, wie dies bereits oben erläutert wurde.

Nachfolgend im Detail beschrieben werden lediglich noch diejenigen optischen Komponenten der vierten Ausführungsform des erfindungsgemäßen Interferometers, die sich maßgeblich von denjenigen aus dem ersten Ausführungsbeispiel unterscheiden. Dies sind i.w. nur der Referenz-Retroreflektor RR in der ersten Planplatte P1 sowie die Abbildungselemente T1, T2 in der zweiten Planplatte P2 bzw. in der ersten Planplatte P1. In Bezug auf den Strahlteiler PBS in der zweiten Planplatte P2 und die Verzögerungseinheit VE in der ersten Planplatte P1 sei auf die obige Beschreibung der Figuren 4a und 4b verwiesen. Analog hierzu sind diese Komponenten auch in der vierten Ausführungsform des erfindungsgemäßen Interferometers ausgebildet.

Figur 8a veranschaulicht im Detail den Strahlengang des Referenzstrahlenbündels im Referenz-Retroreflektor RR des vierten Ausführungsbeispiels. Im linken Teil der Figur 8a sind die Strahlengänge im Referenz-Retroreflektor RR in der ersten Aufspaltebene AE1, in der Zwischenebene ZE sowie in der ersten Vereinigungsebene VE1 gezeigt, rechts ist eine seitliche Ansicht des Strahlengangs des Referenzstrahlenbündels im Referenz-Retroreflektor RR ersichtlich. Die verschiedenen Elemente des Referenz-Retroreflektors RR sind hierbei vergleichbar zu den vorherigen Ausführungsbeispielen wieder auf den beiden gegenüberliegenden Seiten der ersten Planplatte P1 ausgebildet.

In der ersten Aufspaltebene AE1 trifft das aus der Einfallsrichtung IN einfallende Referenzstrahlenbündel auf eine erste Gitterlinse L1, die als Reflexions-Gitterlinse ausgebildet ist. Gemäß der rechts dargestellten, seitlichen Ansicht bewirkt die erste Gitterlinse L1 eine Umlenkung des einfallenden Referenzstrahlenbündels nach unten auf einen gegenüberliegenden ersten planen Reflektor PR1. Dieser lenkt das Referenzstrahlenbündel dann zurück in Richtung eines gegenüberliegenden zweiten planen Reflektors PR2, der in der Zwischenebene ZE angeordnet ist. Wie aus der Figur ersichtlich bewirkt die erste Gitterlinse L1 ferner eine Fokussierung des Referenzstrahlenbündels auf den zweiten planen Reflektor PR2. Das auf den zweiten planen Reflektor PR2 einfallende, fokussierte Referenzstrahlenbündel wird darüber einen wiederum gegenüberliegenden dritten planen Reflektor P3 umgelenkt und von diesem dann zu einer zweiten Gitterlinse L2 zurückgelenkt. Über die zweite Gitterlinse L2 wird das divergierend einfallende Referenzstrahlenbündel so umgelenkt, dass dieses den Referenz-Retroreflektor RR in der Ausfallsrichtung OUT verlässt, wobei die Ausfallsrichtung OUT entgegengesetzt zur Einfallsrichtung IN orientiert und in x-Richtung versetzt hierzu ist. Ferner bewirkt die zweite Gitterlinse L2, dass das divergierend darauf einfallende Referenzstrahlenbündel wieder kollimiert wird. Die beiden verwendeten Gitterlinsen L1, L2 besitzen hier die gleiche Brennweite. Der verwendete diffraktive Referenz-Retroreflektor RR dieses Ausführungsbeispiels unterscheidet sich somit von denjenigen der vorhergehenden Ausführungsbeispiele i.w. darin, dass darin eine Mehrfach-Umlenkung des Referenzstrahlenbündels über drei plane Reflektoren PR1, PR2, PR3 sowie Abbildungen und Umlenkungen über zwei Gitterlinsen L1, L2 von der ersten Aufspaltebene AE1 über die Zwischenebene ZE in die erste Vereinigungsebene VE1 vorgesehen sind. Vergleichbar zu den vorherigen Varianten bewirkt aber auch dieser Retroreflektor RR i.w. eine Rückreflexion des in einer Einfallsebene darauf einfallenden Strahlenbündels entgegengesetzt zur Einfallsrichtung, wobei das rückreflektierte Strahlenbündel in einer Ausfallsebene propagiert und die Einfalls- und Ausfallsebene versetzt zueinander sind.

Anhand von Figur 8b sei abschließend der detaillierte Aufbau und die optische Funktion des ersten Abbildungselements T1 in der zweiten Planplatte P2 erläutert; prinzipiell analog hierzu ist auch das zweite Abbildungselement T2 in der ersten Planplatte P1 ausgebildet.

Links sind in Figur 8b die Strahlengänge des Messstrahlenbündels im ersten Abbildungselement T1 in der ersten Aufspaltebene AE1 sowie in der ersten Vereinigungsebene VE1 gezeigt, rechts ist eine seitliche Ansicht des entsprechenden Strahlengangs im ersten Abbildungselement T1 ersichtlich. Die verschiedenen Elemente des ersten Abbildungselements T1 sind wie aus den Figuren erkennbar auf den beiden gegenüberliegenden Seiten der zweiten Planplatte P2 ausgebildet.

In der ersten Aufspaltebene AE1 trifft das aus der Einfallsrichtung IN einfallende Messstrahlenbündel auf eine erste Gitterlinse L1, die als Reflexions-Gitterlinse ausgebildet ist und eine Brennweite f besitzt. Gemäß der rechts dargestellten, seitlichen Ansicht bewirkt die erste Gitterlinse L1 eine Ablenkung des einfallenden Messstrahlenbündels nach unten sowie eine Fokussierung desselbigen in eine Ebene, die von der Seite der Planplatte P2, die die Gitterlinse L1 trägt, den Abstand 2 • D/3 beabstandet ist, wenn D die Dicke der Planplatte P2 bezeichnet. Die Brennweite f der ersten Gitterlinse L1 wird dann f = 2 • D/3 gewählt. Anschließend trifft das Messstrahlenbündel auf einen an der gegenüberliegenden Seite der zweiten Planplatte P2 angeordneten ersten planen Reflektor PR1, dessen reflektierende Fläche in Richtung der ersten Gitterlinse L1 orientiert ist. Der plane Reflektor PR1 lenkt das Messstrahlenbündel dann zurück in Richtung der gegenüberliegenden zweiten Gitterlinse L2, die in der Zwischenebene ZE angeordnet und als Reflexions-Gitterlinse ausgebildet ist. Die zweite Gitterlinse L2 kollimiert das divergent darauf einfallende Messstrahlenbündel und besitzt eine Brennweite 2f in Glas, die doppelt so groß ist wie die Brennweite f der ersten Gitterlinse L1. Das auf die zweite Gitterlinse L2 einfallende Messstrahlenbündel wird von der zweiten Gitterlinse L2 so umgelenkt, dass dieses das erste Abbildungselement T1 in der Zwischenebene ZE in der Ausfallsrichtung OUT verlässt, wobei die Ausfallsrichtung OUT entgegengesetzt zur Einfallsrichtung IN orientiert ist. Ferner bewirkt die zweite Gitterlinse L2, dass das divergierend darauf einfallende Messstrahlenbündel wieder kollimiert wird. Aufgrund der gewählten Brennweiten der ersten und zweiten Gitterlinsen wird zudem der Strahldurchmesser des einfallenden Messstrahlenbündel vergrößert, d.h. das in der Zwischenebene ZE in der Ausfallsrichtung OUT aus dem Abbildungselement T1 ausfallende Messstrahlenbündel besitzt vorliegend den doppelten Strahldurchmesser gegenüber dem auf das Abbildungselement T1 einfallenden Messstrahlenbündel.

Das in der ersten Planplatte P1 angeordnete zweite Abbildungselement T2 weist einen hierzu vergleichbaren Aufbau auf. So umfasst dieses eine dritte und vierte Gitterlinse sowie einen zweiten planen Reflektor, wobei die Gitterlinsen einerseits und der plane Reflektor andererseits auf den gegenüberliegenden Seiten der ersten Planplatte P1 angeordnet sind und die reflektierende Fläche des Reflektors in Richtung der Gitterlinsen orientiert ist. Die dritte Gitterlinse, auf die das von der zweiten Planplatte her einfallende Messstrahlenbündel zunächst auftrifft, besitzt die doppelte Brennweite 2f'in Glas wie die vierte Gitterlinse mit der Brennweite f = 2 • D'/3, wobei D' die Dicke der Planplatte P2 bezeichnet. Die dritte Gitterlinse ist in der Zwischenebene ZE angeordnet und die vierte Gitterlinse in der ersten Vereinigungsebene VE1. Die dritte Gitterlinse fokussiert analog zur ersten Gitterlinse des ersten Abbildungselements das einfallende Messstrahlenbündel, die vierte Gitterlinse kollimiert analog zur zweiten Gitterlinse das Messstrahlenbündel wieder. Über das zweite Abbildungselement T2 wird das darauf einfallende Messstrahlenbündel M somit zum einen in die erste Vereinigungsebene VE1 umgelenkt und zum anderen der Strahldurchmesser wieder halbiert.

Der maßgebliche Unterschied des vierten Ausführungsbeispiels des erfindungsgemäßen Interferometers zu den vorher erläuterten Varianten besteht i.w. darin, dass das Messstrahlenbündel M insgesamt drei Mal den Messreflektor MR beaufschlagt und im Messarm die beiden Abbildungselemente T1, T2 angeordnet sind. Über die Abbildungselemente T1, T2 erfolgt aufgrund der gewählten Brennweiten-Dimensionierung der verwendeten Gitterlinsen eine Verdoppelung bzw. Halbierung des Strahldurchmessers des Messstrahlenbündels M. Auf diese Art und Weise ist sichergestellt, dass beim zweiten Beaufschlagen des Messreflektors MR das Messstrahlenbündel M senkrecht auf den Messreflektor MR auftrifft, auch wenn ggf. der Messreflektor MR verkippt gegenüber der Solllage angeordnet sein sollte. Es resultiert somit ein besonders verkippunempfindliches Gesamtsystem.

Neben den konkret beschriebenen Ausführungsbeispielen existieren im Rahmen der vorliegenden Erfindung selbstverständlich noch weitere Ausgestaltungsmöglichkeiten.

So ist beispielsweise möglich, eine Mehrachs-Lösung aufzubauen, bei der die erforderliche Strahlaufspaltung für die verschiedenen Messachsen nicht extern über einen Faser-Splitter und eine getrennte Zuführung der Beleuchtungs-Strahlenbündel zu den einzelnen Messachsen erfolgt. In einer derartigen Variante würde diese Strahlaufspaltung über Strahlteilerelemente erfolgen, die in die Planplatten integriert sind, beispielsweise geeignete Gitter oder Strahlteilerschichten.

Desweiteren ist es möglich, die durch die λ/4-Platten in den Strahlengängen im Messarm verursachten optischen Weglängendifferenzen durch Ausgleichselemente im Referenzarm auszugleichen. Hierzu können etwa passend dimensionierte Ausgleichsgläser oder eine in der Dicke angepasste Referenzplatte vorgesehen werden.

Schließlich kann das erfindungsgemäße Interferometer auch monolithisch ausgeführt werden, indem die beiden Planplatten miteinander verkittet werden und ggf. eine Abstandsplatte zwischen den beiden Planplatten vorgesehen ist.

Die verschiedenen Ausführungsbeispiele des erfindungsgemäßen Interferometers können sowohl als Homodyn- wie auch als Heterodyn-Varianten ausgebildet werden.

Im Fall einer Homodyn-Auswertung würde die Detektoranordnung eingangsseitig eine λ/4-Platte sowie ein nachgeordnetes Aufspaltgitter umfassen. Die auf die λ/4-Platte auftreffenden, orthogonal zueinander polarisierten Teilstrahlenbündel werden darüber in recht- und linkszirkular polarisiertes Licht umgewandelt. Dieses überlagert sich wieder zu linear polarisiertem Licht, welches sich mit der Phasenverschiebung der Lichtwellen zueinander dreht. Dieser, sich drehende linear polarisierte Zustand wird durch das Aufspaltgitter in drei intensitätsgleiche Strahlenbündel aufgespalten. Diese Strahlenbündel durchlaufen drei Polarisationsfilter, die unter 120° zueinander orientiert sind, bevor sie auf nachgeordnete Detektorelemente auftreffen, an denen dann um 120° phasenverschobene Abstandssignale anliegen, die zur Positionsauswertung weiterverarbeitbar sind. Die Abstandssignale können entweder im erfindungsgemäßen Interferometer in elektrische Signale umgewandelt werden oder aber über Multimode-Lichtleitfasern zu einer entfernt angeordneten Folgeelektronik übertragen werden.

Im Fall einer gewünschten Heterodyn-Auswertung werden zwei Teilstrahlenbündel mit unterschiedlichen Frequenzen und unterschiedlichen Polarisationen (p, s) in das erfindungsgemäße Interferometer eingespeist. Diese durchlaufen dann unterschiedliche Wege im Mess- und Referenzarm, werden ausgangsseitig in eine Multimode-Lichtleitfaser eingekoppelt und an eine Folgeelektronik übertragen, wo die relevante Phaseninformation aus einer Überlagerung mit einem Lokaloszillator gewonnen wird.

## Patentansprüche

1. Interferometer mit
- einer Lichtquelle (10; LQ),
- einem Strahlteiler (23; PBS), der ein von der Lichtquelle (10; LQ) emittiertes erstes Strahlenbündel in mindestens ein Messstrahlenbündel (M; M1, M2) und mindestens ein Referenzstrahlenbündel (R) aufspaltet, über die eine erste Aufspaltebene (AE1) aufgespannt ist und bis zur Wiedervereinigung an einem Vereinigungsort (V) in einer ersten Vereinigungsebene (VE1) das Messstrahlenbündel (M; M1, M2) in einem Messarm und das Referenzstrahlenbündel (R) in einem Referenzarm propagiert, wobei die erste Vereinigungsebene (VE1) parallel zur ersten Aufspaltebene (AE1) orientiert ist,
- einem Messreflektor (30; 130; 230; MR), der im Messarm angeordnet und mit einem entlang einer Messrichtung (y) beweglichen Messobjekt (31; 131; 231) verbunden ist, wobei das Messstrahlenbündel (M; M1, M2) mindestens zweimal senkrecht auf den Messreflektor (30; 130; 230; MR) einfällt,
- einem Referenz-Retroreflektor (RR2; RR) der im Referenzarm angeordnet ist, wobei das Referenzstrahlenbündel (R) mindestens einmal auf den Referenz-Retroreflektor (RR2; RR) einfällt,
- einer Detektoranordnung (40; DET), über die mindestens ein erstes Abstandssignal aus den am Vereinigungsort (V) überlagerten interferierenden Mess- und Referenzstrahlenbündeln (M; M1, M2; R) bezüglich der Position des Messobjekts (31; 131; 231) erfassbar ist,
- einer ersten transparenten Planplatte (21; 121; 221; P1) und einer zweiten transparenten Planplatte (22; 122; 222; P2), die parallel zueinander im Strahlengang zwischen der Lichtquelle (10; LQ) und der Detektoranordnung (40; DET) angeordnet sind, wobei der Messreflektor (30; 130; 230; MR) gegenüber den beiden Planplatten (21; 121; 221; P1; 22; 221; 222; P2) entlang der Messrichtung (y) beweglich ist und
- in der ersten Planplatte (21; 121; 221; P1) der Referenz-Retroreflektor (RR2; RR) ausgebildet ist und
- auf der zweiten Planplatte (22; 122; 222; P2) der Strahlteiler (23; PBS) angeordnet ist.

2. Interferometer nach Anspruch 1, wobei der Referenz-Retroreflektor (RR2; RR) in der ersten Planplatte (21; 121; 221; P1) als diffraktiver Retroreflektor ausgebildet ist und mindestens eine auf einer Seite der ersten Planplatte (21; 121; 221; P1) angeordnete Gitterlinse und mindestens einen auf der gegenüberliegenden Seite der ersten Planplatte (21; 121; 221; P1) angeordneten planen Reflektor umfasst, dessen reflektierende Seite in Richtung der Gitterlinse orientiert ist und wobei über die mindestens eine Gitterlinse eine Umlenkung und Fokussierung des darauf einfallenden Referenzstrahlenbündels (R) auf den Reflektor erfolgt.

3. Interferometer nach Anspruch 1, wobei die erste Planplatte (21; 121; 221; P1) desweiteren mindestens eine Verzögerungseinheit (VE) aufweist, entlang der das Referenzstrahlenbündel (R) propagiert und die Verzögerungseinheit (VE) mindestens zwei plane Reflektoren umfasst, die an gegenüberliegenden Seiten der ersten Planplatte (21; 121; 221; P1) angeordnet sind, wobei die reflektierenden Flächen der Reflektoren jeweils in Richtung der gegenüberliegenden Seite der ersten Planplatte (21; 121; 221; P1) orientiert sind.

4. Interferometer nach Anspruch 3, wobei die mindestens eine Verzögerungseinheit (VE), die das Referenzstrahlenbündel (R) in der ersten Planplatte (21; 121; 221; P1) durchläuft, derart ausgebildet ist, dass das Referenzstrahlenbündel (R) und das Messstrahlenbündel (M; M1, M2) zwischen Aufspaltung und Wiedervereinigung identische Wege in den beiden Planplatten (21; 121; 221; P1; 22; 122; 222; P2) durchlaufen.

5. Interferometer nach Anspruch 1, wobei der Strahlteiler (23; PBS) auf der zweiten Planplatte (22; 122; 222; P2) als polarisationsoptische Strahlteilerschicht ausgebildet ist, die auf einer ersten Seite der zweiten Planplatte (22; 122; 222; P2) angeordnet ist und wobei diese Seite in Richtung der ersten Planplatte (21; 121; 221; P1) orientiert ist.

6. Interferometer nach Anspruch 1, wobei in der zweiten Planplatte (22; 122; 222; P2) desweiteren mindestens ein Mess-Retroreflektor (RR1) in Form eines diffraktiven Retroreflektors ausgebildet ist und mindestens eine auf einer Seite der zweiten Planplatte (22; 122; 222; P2) angeordnete Gitterlinse und mindestens einen auf der gegenüberliegenden Seite der zweiten Planplatte (22; 122; 222; P2) angeordneten planen Reflektor umfasst, dessen reflektierende Seite in Richtung der Gitterlinse orientiert ist und wobei über die Gitterlinse eine Umlenkung und Fokussierung des darauf einfallenden Messstrahlenbündels (M; M1, M2) auf den Reflektor erfolgt.

7. Interferometer nach mindestens einem der Ansprüche 1 - 6, wobei senkrecht beabstandet zur ersten Aufspaltebene (AE1) mindestens ein zweites Strahlenbündel (S2) in einer zweiten Aufspaltebene (AE2) auf die erste Planplatte (121) einfällt und die beiden Planplatten (121; 122) in einem weiteren Bereich so ausgebildet sind, dass in Bezug auf das zweite Strahlenbündel (S2) in der zweiten Aufspaltebene (AE2) und in einer zweiten Vereinigungsebene (VE1) ein identischer Strahlverlauf wie in den ersten Aufspalt- und Vereinigungsebenen (AE1, VE1) resultiert, und darüber ein zweites Abstandssignal bezüglich der Bewegung des Messobjekts (30; 131; 231) entlang der Messrichtung (y) erzeugbar ist.

8. Interferometer nach mindestens einem der Ansprüche 1 - 6, wobei in der ersten Aufspaltebene (AE1) beabstandet zum ersten Strahlenbündel (S1) mindestens ein zweites Strahlenbündel (S2) auf die erste Planplatte (221) einfällt und die beiden Planplatten (221; 222) in einem weiteren Bereich so ausgebildet sind, dass in Bezug auf das zweite Strahlenbündel (S2) in der ersten Aufspaltebene (AE1) und in der ersten Vereinigungsebene (VE1) ein identischer Strahlverlauf wie beim ersten Strahlenbündel (S1) resultiert, und darüber ein zweites Abstandssignal bezüglich der Bewegung des Messobjekts (131) entlang der Messrichtung (y) erzeugbar ist.

9. Interferometer nach Anspruch 1, wobei
- die zweite Planplatte (P2) ferner ein erstes Abbildungselement (T1) aufweist mit
- mindestens einer ersten Gitterlinse (L1) und einer zweiten Gitterlinse (L2), die beide auf einer Seite der zweiten Planplatte (22; 122; 222; P2) angeordnet sind,
- und mindestens einem auf der gegenüberliegenden Seite der zweiten Planplatte (P2) angeordneten ersten planen Reflektor (PR1), dessen reflektierende Seite in Richtung der ersten und zweiten Gitterlinse (L1, L2) orientiert ist,
- wobei über das erste Abbildungselement (T1) eine Vergrößerung des Strahldurchmessers des darauf einfallenden Messstrahlenbündels (M) resultiert, und
- die erste Planplatte (P1) ferner ein zweites Abbildungselement (T2) aufweist mit
- mindestens einer dritten Gitterlinse und einer vierten Gitterlinse, die beide auf einer Seite der ersten Planplatte angeordnet sind,
- und einem auf der gegenüberliegenden Seite der ersten Planplatte (P1) angeordneten zweiten planen Reflektor, dessen reflektierende Seite in Richtung der dritten und vierten diffraktiven Gitterlinse orientiert ist,
- wobei über das zweite Abbildungselement (T2) eine Verkleinerung des Strahldurchmessers des darauf einfallenden Messstrahlenbündels (M) resultiert.

10. Interferometer nach Anspruch 9, wobei
- über die erste und dritte Gitterlinse (L1) jeweils eine Fokussierung des darauf einfallenden Messstrahlenbündels (M) resultiert und
- über die zweite und vierte Gitterlinse (L2) jeweils eine Kollimation des darauf einfallenden Messstrahlenbündels (M) resultiert.

11. Interferometer nach Anspruch 10, wobei
- das Messstrahlenbündel (M) nach dem Durchlaufen des ersten Abbildungselements (T1) in einer Zwischenebene (ZE) in Richtung des Messreflektors (MR) propagiert und die Zwischenebene (ZE) zwischen der ersten Aufspaltebene (AE1) und der ersten Vereinigungsebene (VE1) angeordnet und parallel zu diesen orientiert ist und
- das Messstrahlenbündel (M) nach dem Durchlaufen des zweiten Abbildungselements (T2) in der ersten Vereinigungsebene (VE1) propagiert.

12. Interferometer nach Anspruch 11, wobei der Referenz-Retroreflektor (RR) in der ersten Planplatte (P1) als diffraktiver Retroreflektor ausgebildet ist und zwei auf einer Seite der ersten Planplatte (P1) angeordnete Gitterlinsen (L1, L2) sowie einen planen Reflektor (PR2) und zwei auf der gegenüberliegenden Seite der ersten Planplatte (P1) angeordnete plane Reflektoren (PR1, PR3) umfasst, wobei die reflektierenden Seiten der Reflektoren (PR1, PR2, PR3) jeweils zur gegenüberliegenden Seite orientiert sind, so dass das in der ersten Aufspaltebene (AE1) auf die erste Planplatte (P1) einfallende Referenzstrahlenbündel (R) zunächst einen optisch unwirksamen Bereich der ersten Planplatte (P1) durchläuft und auf die erste Gitterlinse (L1) trifft, über die eine Umlenkung des Referenzstrahlenbündels (R) in Richtung des gegenüberliegenden ersten planen Reflektors (PR1) erfolgt, vom ersten planen Reflektor (PR1) eine Umlenkung des Referenzstrahlenbündels (R) in Richtung des gegenüberliegenden zweiten planen Reflektors (PR2) in der Zwischenebene (ZE) erfolgt, vom zweiten planen Reflektor (PR2) eine Umlenkung des Referenzstrahlenbündels (R) in Richtung des gegenüberliegenden dritten planen Reflektors (PR3) erfolgt, und vom dritten planen Reflektor (PR3) eine Umlenkung des Referenzstrahlenbündels (R) in Richtung der zweiten Gitterlinse (L2) in der ersten Vereinigungsebene (VE1) resultiert.

13. Interferometer nach einem der Ansprüche 2 oder 8 oder 12, wobei die Gitterlinsen jeweils als Reflexions-Gitterlinsen ausgebildet sind.

## Claims

1. Interferometer, comprising
- a light source (10; LQ),
- a beam splitter (23; PBS), which splits a first beam emitted by the light source (10; LQ) into at least one measurement beam (M; M1, M2) and at least one reference beam (R), by means of which a first splitting plane (AE1) is spanned, with the measurement beam (M; M1, M2) propagating in a measurement arm and the reference beam (R) propagating in a reference arm up to reunification at a unification location (V) in a first unification plane (VE1), wherein the first unification plane (VE1) is oriented parallel to the first splitting plane (AE1),
- a measurement reflector (30; 130; 230; MR), which is arranged in the measurement arm and connected to a measurement object (31; 131; 231) movable along a measurement direction (y), wherein the measurement beam (M; M1, M2) is incident at least twice on the measurement reflector (30; 130; 230; MR) in a perpendicular manner,
- a reference retroreflector (RR2; RR), which is arranged in the reference arm, wherein the reference beam (R) is incident at least once on the reference retroreflector (RR2; RR)
- a detector arrangement (40; DET), by means of which at least a first distance signal in relation to the position of the measurement object (31; 131; 231) is registrable from the interfering measurement and reference beams (M; M1, M2; R) superposed at the unification location (V), - a first transparent plane plate (21; 121; 221; P1) and a second transparent plane plate (22; 122; 222; P2), which are arranged parallel to one another in the beam path between the light source (10; LQ) and the detector arrangement (40; DET), wherein the measurement reflector (30; 130; 230; MR) is movable along the measurement direction (y) in relation to both plane plates (21; 121; 221; P1; 22; 221; 222; P2) and
- the reference retroreflector (RR2; RR) is embodied in the first plane plate (21; 121; 221; P1) and
- the beam splitter (23; PBS) is arranged on the second plane plate (22; 122; 222; P2).

2. Interferometer according to Claim 1, wherein the reference retroreflector (RR2; RR) in the first plane plate (21; 121; 221; P1) is embodied as a diffractive retroreflector and comprises at least one grating lens arranged on a side of the first plane plate (21; 121; 221; P1) and at least one plane reflector arranged on the opposite side of the first plane plate (21; 121; 221; P1), the reflecting side of which plane reflector being oriented in the direction of the grating lens, and wherein, by means of the at least one grating lens, there is a deflection and focusing of the reference beam (R) incident thereon towards the reflector.

3. Interferometer according to Claim 1, wherein the first plane plate (21; 121; 221; P1) moreover has at least one retardation unit (VE), along which the reference beam (R) propagates, said retardation unit (VE) comprising at least two plane reflectors, which are arranged on opposite sides of the first plane plate (21; 121; 221; P1), wherein the reflecting faces of the reflectors are respectively oriented in the direction of the opposite side of the first plane plate (21; 121; 221; P1).

4. Interferometer according to Claim 3, wherein the at least one retardation unit (VE), through which the reference beam (R) propagates in the first plane plate (21; 121; 221; P1), is embodied in such a way that the reference beam (R) and the measurement beam (M; M1, M2) pass over identical paths in the two plane plates (21; 121; 221; P1; 22; 122; 222; P2) between being split and being reunited.

5. Interferometer according to Claim 1, wherein the beam splitter (23; PBS) is embodied at the second plane plate (22; 122; 222; P2) as a polarization-optical beam splitter layer, which is arranged on a first side of the second plane plate (22; 122; 222; P2), this side being oriented in the direction of the first plane plate (21; 121; 221; P1).

6. Interferometer according to Claim 1, wherein at least one measurement retroreflector (RR1) in the form of a diffractive retroreflector is moreover embodied in the second plane plate (22; 122; 222; P2) and comprises at least one grating lens arranged on one side of the second plane plate (22; 122; 222; P2) and at least one plane reflector arranged on the opposite side of the second plane plate (22; 122; 222; P2), the reflecting side of which reflector being oriented in the direction of the grating lens, and wherein, by means of the grating lens, there is a deflection and focusing of the measurement beam (M; M1, M2) incident thereon towards the reflector.

7. Interferometer according to at least one of Claims 1-6, wherein, at a perpendicular distance to the first splitting plane (AE1), at least one second beam (S2) is incident on the first plane plate (121) in a second splitting plane (AE2) and the two plane plates (121; 122) are embodied in such a way in a further region that, in relation to the second beam (S2) in the second splitting plane (AE2) and in a second unification plane (VE1), there is an identical beam profile as in the first splitting and unification planes (AE1, VE1), and wherein moreover a second distance signal is generable in relation to the movement of the measurement object (30; 131; 231) along the measurement direction (y).

8. Interferometer according to at least one of Claims 1-6, wherein at least one second beam (S2) is incident on the first plane plate (221) in the first splitting plane (AE1) at a distance from the first beam (S1) and the two plane plates (221; 222) are embodied in such a way in a further region that, in relation to the second beam (S2) in the first splitting plane (AE1) and in the first unification plane (VE1), there is an identical beam profile as in the case of the first beam (S1), and wherein moreover a second distance signal is generable in relation to the movement of the measurement object (131) along the measurement direction (y).

9. Interferometer according to Claim 1, wherein
- the second plane plate (P2) furthermore comprises a first imaging element (T1), comprising
- at least one first grating lens (L1) and one second grating lens (L2), which are both arranged on one side of the second plane plate (22; 122; 222; P2),
- and at least one first plane reflector (PR1) arranged on the opposite side of the second plane plate (P2), the reflecting side of which first plane reflector being oriented in the direction of the first and second grating lens (L1, L2),
- wherein, by way of the first imaging element (T1), there is an enlargement of the beam diameter of the measurement beam (M) incident thereon, and
- the first plane plate (P1) furthermore comprises a second imaging element (T2), comprising
- at least one third grating lens and one fourth grating lens, which are both arranged on one side of the first plane plate,
- and a second plane reflector arranged on the opposite side of the first plane plate (P1), the reflecting side of which first plane reflector being oriented in the direction of the third and fourth diffractive grating lens,
- wherein, by way of the second imaging element (T2), there is a reduction in the beam diameter of the measurement beam (M) incident thereon.

10. Interferometer according to Claim 9, wherein,
- by way of the first and the third grating lens (L1), there respectively results a focusing of the measurement beam (M) incident thereon and,
- by way of the second and fourth grating lens (L2), there respectively results 5 a collimation of the measurement beam (M) incident thereon.

11. Interferometer according to Claim 10, wherein,
- after passing through the first imaging element (T1), the measurement beam (M) propagates in an intermediate plane (ZE) in the direction of the measurement reflector (MR) and the intermediate plane (ZE) is arranged between the first splitting plane (AE1) and the first unification plane (VE1) and oriented parallel to these and,
- after passing through the second imaging element (T2), the measurement beam (M) propagates in the first unification plane (VE1).

12. Interferometer according to Claim 11, wherein the reference retroreflector (RR) in the first plane plate (P1) is embodied as a diffractive retroreflector and comprises two grating lenses (L1, L2) arranged on one side of the first plane plate (E1) and a plane reflector (PR2) and two plane reflectors (PR1, PR3) arranged on the opposite side of the first plane plate (P1), wherein the reflecting sides of the reflectors (PR1, PR2, PR3) are respectively oriented toward the opposite side such that the reference beam (R) incident on the first plane plate (P1) in the first splitting plane (AE1) initially passes through an optically ineffective region of the first plane plate (P1) and is incident on the first grating lens (L1), by means of which there is the deflection of the reference beam (R) in the direction of the opposite first planar reflector (PR1), said first planar reflector (PR1) bringing about a deflection of the reference beam (R) in the direction of the opposite second planar reflector (PR2) in the intermediate plane (ZE), said second planar reflector (PR2) bringing about a deflection of the reference beam (R) in the direction of the opposite third planar reflector (PR3) and said third planar reflector (PR3) leading to a deflection of the reference beam (R) in the direction of the second grating lens (L2) in the first unification plane (VE1).

13. Interferometer according to one of Claims 2 or 8 or 12, wherein the grating lenses are respectively embodied as reflection grating lenses.

## Revendications

1. interféromètre comportant
- une source de lumière (10 ; LQ),
- un diviseur de faisceau (23 ; PBS) qui divise un premier faisceau de rayons émis par la source de lumière (10 ; LQ) en au moins un faisceau de rayons de mesure (M ; M1, M2) et au moins un faisceau de rayons de référence (R) par lesquels passe un premier plan de division (AE1) et le faisceau de rayons de mesure (M ; M1, M2) se propageant dans un bras de mesure et le faisceau de rayons de référence (R) se propageant dans un bras de référence jusqu'à se réunir en un point de réunification (V) dans un premier plan de réunification (VE1), dans lequel le premier plan de réunification (VE1) est orienté parallèlement au premier plan de division (AE1),
- un réflecteur de mesure (30 ; 130 ; 230 ; MR) qui est disposé dans le bras de mesure et est replié à un objet de mesure (31 ; 131 ; 231) mobile le long d'une direction de mesure (y), dans lequel le faisceau de rayons de mesure (M ; M1, M2) est incident au moins deux fois perpendiculairement au réflecteur de mesure (30 ; 130 ; 230 ; MR),
- un rétroréflecteur de référence (RR2 ; RR) qui est disposé dans le bras de référence, dans lequel le faisceau de rayons de référence (R) est incident au moins une fois sur le rétroréflecteur de référence (RR2, RR),
- un moyen détecteur (40 ; DET) par l'intermédiaire duquel un premier signal de distance peut être détecté à partir des faisceaux de rayons de mesure et de référence (M ; M1, M2 ; R) se superposant et interférant au point de réunification (V) par rapport à la position de l'objet de mesure (31 ; 131 ; 231), - une première lame plane transparente (21 ; 121 ; 221 ; P1) et une deuxième lame plane transparente (22 ; 122 ; 222 ; P2) qui sont disposées parallèlement l'une à l'autre dans le chemin de faisceau entre la source de lumière (10 ; LQ) et le moyen détecteur (40 ; DET), dans lequel le réflecteur de mesure (30 ; 130 ; 230 ; MR) est mobile par rapport aux deux lames planes (21 ; 121 ; 221 ; P1 ; 22 ; 221 ; 222 ; P2) le long de la direction de mesure (y) et
- le rétroréflecteur de référence (RR2 ; RR) est réalisé dans la première lame plane (21 ; 121 ; 221 ; P1) et
- le diviseur de faisceau (23 ; PBS) est disposé sur la deuxième lame plane (22 ; 122 ; 222 ; P2).

2. Interféromètre selon la revendication 1, dans lequel le rétroréflecteur de référence (RR2 ; RR) est réalisé dans la première lame plane (21 ; 121 ; 221 ; P1) sous la forme d'un rétroréflecteur diffractant et comprend au moins une lentille-réseau disposée sur une face de la première lame plane (21 ; 121 ; 221 ; P1) et au moins un réflecteur plan disposé sur la face opposée de la première lame plane (21 ; 121 ; 221 ; P1), dont la face réfléchissante est orientée dans la direction de la lentille-réseau et dans lequel une déviation et une focalisation du faisceau de rayons de référence dévié (R) incident sur celle-ci se produit sur le réflecteur par l'intermédiaire de l'au moins une lentille-réseau.

3. Interféromètre selon la revendication 1, dans lequel la première lame plane (21 ; 121 ; 221 ; P1) comporte en outre au moins une unité à retard (VE) le long de laquelle se propage le faisceau de rayons de référence (R) et l'unité à retard (VE) comprend au moins deux réflecteurs plans qui sont disposés sur des faces opposées de la première lame plane (21 ; 121 ; 221 ; P1), dans lequel les surfaces réfléchissantes des réflecteurs sont respectivement orientées dans la direction de la face opposée de la première lame plane (21 ; 121 ; 221 ; P1).

4. Interféromètre selon la revendication 3, dans lequel au moins une unité à retard (VE) qui passe à travers le faisceau de rayons de référence (R) dans la première lame plane (21 ; 121 ; 221 ; P1) est conçue de manière à ce que le faisceau de rayons de référence (R) et le faisceau de rayons de mesure (M ; M1 ; M2) parcourent, entre les points de division et de réunification, des chemins identiques dans les deux lames planes (21 ; 121 ; 221 ; P1 ; 22 ; 122 ; 222 ; P2).

5. Interféromètre selon la revendication 1, dans lequel le diviseur de faisceau (23 ; PBS) est réalisé sur la deuxième lame plane (22 ; 122 ; 222 ; P2) en tant que couche de division de faisceau à polarisation qui est disposée sur une première face de la deuxième lame plane (22 ; 122 ; 222 ; P2) et dans lequel ladite face est orientée dans la direction de la première lame plane (21 ; 121 ; 221 ; P1).

6. Interféromètre selon la revendication 1, dans lequel au moins un rétroréflecteur de mesure (RR1) sous la forme d'un rétroréflecteur diffractant est en outre réalisé dans la deuxième lame plane (22 ; 122 ; 222 ; P2) et comprend au moins une lentille-réseau disposée sur une face de la deuxième lame plane (22 ; 122 ; 222 ; P2) et au moins un réflecteur plan disposé sur la face opposée de la deuxième lame plane (22 ; 122 ; 222 ; P2), dont la face réfléchissante est orientée dans la direction de la lentille-réseau et dans lequel une déviation et une focalisation du faisceau de rayons de mesure (M ; M1, M2) sont effectuées sur le réflecteur par l'intermédiaire de la lentille-réseau.

7. Interféromètre selon l'une quelconque des revendications 1-6, dans lequel au moins un deuxième faisceau de rayons (S2) est incident dans le deuxième plan de division (AE2) sur la première lame plane (121) de manière perpendiculairement espacée du premier plan de division (AE1) et les deux lames planes (121 ; 122) sont réalisées, dans une autre région, de telle manière qu'il en résulte un trajet de faisceau identique à celui que l'on a dans les plans de division et de réunification (AE1, VE1) par rapport au deuxième faisceau de rayons (S2) dans le deuxième plan de division (AE2) et dans un deuxième plan de réunification (VE1), et qu'un deuxième signal de distance lié au mouvement de l'objet de mesure (30 ; 131 ; 231) le long de la direction de mesure (y) puisse en outre être généré.

8. Interféromètre selon l'une quelconque des revendications 1-6, dans lequel au moins un deuxième faisceau de rayons (S2) est incident sur la première lame plane (221) dans le premier plan de division (AE1) de manière espacée du faisceau de rayons (S1) et dans lequel les deux lames planes (221 ; 222) sont réalisées, dans une autre région, de telle manière qu'il en résulte un trajet de faisceau identique à celui que l'on a pour le premier faisceau de rayons (S1) par rapport au deuxième faisceau de rayons (S2) dans le premier plan de division (AE1) et dans le premier plan de réunification (VE1), et qu'un deuxième signal de distance lié au mouvement de l'objet de mesure (131) dans la direction de mesure (y) puisse en outre être généré.

9. Interféromètre selon la revendication 1, dans lequel
- la deuxième lame plane (P2) comprend en outre un premier élément de formation d'image (T1) comportant
- au moins une première lentille-réseau (L1) et une deuxième lentille-réseau (L2) qui sont toutes deux disposées sur une face de la deuxième lame plane (22 ; 122 ; 222 ; P2)
- et au moins un premier réflecteur plan (PR1) disposé sur la face opposée de la deuxième lame plane (P2), dont la face réfléchissante est orientée dans la direction des première et deuxième lentilles-réseaux (L1, L2),
- dans lequel il se produit, par l'intermédiaire du premier élément de formation d'image (T1), une augmentation du diamètre de faisceau du faisceau de rayons de mesure (M) incident sur celui-ci, et
- la première lame plane (P1) comprend en outre un deuxième élément de formation d'image (T2) comportant
- au moins une troisième lentille-réseau et une quatrième lentille-réseau qui sont toutes deux disposées sur une face de la première lame plane,
- et un deuxième réflecteur plan disposé sur la face opposée de la première lame plane (P1), dont la face réfléchissante est orientée dans la direction des troisième et quatrième lentilles-réseaux diffractantes,
- dans lequel il se produit, par l'intermédiaire du deuxième élément de formation d'image (T2), une diminution du diamètre de faisceau du faisceau de rayons de mesure (M) incident sur celui-ci.

10. Interféromètre selon la revendication 9, dans lequel
- il se produit respectivement par l'intermédiaire des première et troisième lentilles-réseaux (L1) une focalisation du faisceau de rayons de mesure (M) incident sur celles-ci et
- il se produit respectivement, par l'intermédiaire des deuxième et quatrième lenLilles-réseaux (L2), une collimation du faisceau de rayons de mesure (M) incident sur celles-ci.

11. Interféromètre selon la revendication 10, dans lequel
- le faisceau de rayons de mesure (M) après être passé à travers le premier élément de formation d'image (T1), se propage dans un plan intermédiaire (ZE) dans la direction du réflecteur de mesure (MR) et le plan intermédiaire (ZE) est disposé entre le premier plan de division (AE1) et le premier plan de réunification (VE1) et est orienté parallèlement à ceux-ci ; et
- le faisceau de rayons de mesure (M), après être passé à travers le deuxième élément de formation d'image (T2), se propage dans le premier plan de réunification (VE1).

12. Interféromètre selon la revendication 11, dans lequel le rétroréflecteur de référence (RR) est réalisé dans la première lame plane (P1) sous la forme d'un rétroréflecteur diffractant et comprend deux lentilles-réseaux (L1, L2) disposées sur une face de la première lame plane (P1) ainsi qu'un réflecteur plan (PR2) et deux réflecteurs plans (PR1, PR3) disposés sur la face opposée de la première lame plane (P1), dans lequel les faces réfléchissantes des réflecteurs (PR1, PR2, PR3) sont respectivement orientées vers la face opposée de manière à ce que le faisceau de rayons de référence (R) incident dans le premier plan de division (AE1) sur la première lame plane (P1) passe directement à travers une région optiquement inactive de la première lame plane (P1) et soit incident sur la première lentille-réseau (L1), par l'intermédiaire de laquelle il se produit une déviation du faisceau de rayons de référence (R) dans la direction du premier réflecteur plan opposé (PR1), il se produit du fait du premier réflecteur plan (PR1) une déviation du faisceau de rayons de référence (R) dans la direction du deuxième réflecteur plan opposé (PR2) dans le plan intermédiaire (ZE), il se produit du fait du deuxième réflecteur plan (PR2) une déviation du faisceau de rayons de référence (R) dans la direction du troisième réflecteur plan opposé (PR3) et il se produit du fait du troisième réflecteur plan (PR3) une déviation du faisceau de rayons de référence (R) dans la direction de la deuxième lentille-réseau (L2) dans le premier plan de réunification (VE1).

13. Interféromètre selon l'une quelconque des revendications 2 ou 8 ou 12, dans lequel les lentilles-réseaux sont respectivement réalisées sous la forme de lentilles-réseaux de réflexion.
